(19)

Europäisches
Patentamt
European
Patent Office
Office européen
des brevets

(11) **EP 4 607 475 A1**

(12) **EUROPEAN PATENT APPLICATION**
published in accordance with Art. 153(4) EPC

(43) Date of publication:
**27.08.2025 Bulletin 2025/35**

(21) Application number: **24766188.7**

(22) Date of filing: **12.01.2024**

(51) International Patent Classification (IPC):
*G06V 10/764* (2022.01)

(52) Cooperative Patent Classification (CPC):
**G06T 11/001; G06F 18/00; G06T 7/11; G06V 10/44;
G06V 10/54; G06V 10/761; G06V 10/764;
G06V 10/82;** G06T 2207/20081; Y02T 10/40

(86) International application number:
**PCT/CN2024/071927**

(87) International publication number:
**WO 2024/183465 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2023 CN 202310260221**

(71) Applicant: **Tencent Technology (Shenzhen)
Company Limited
Shenzhen, Guangdong 518057 (CN)**

(72) Inventors:
• **ZHANG, Keyue
  Shenzhen, Guangdong 518057 (CN)**
• **CAO, Junyi
  Shenzhen, Guangdong 518057 (CN)**
• **YAO, Taiping
  Shenzhen, Guangdong 518057 (CN)**
• **YIN, Bangjie
  Shenzhen, Guangdong 518057 (CN)**
• **DING, Shouhong
  Shenzhen, Guangdong 518057 (CN)**

(74) Representative: **Reddie & Grose LLP
The White Chapel Building
10 Whitechapel High Street
London E1 8QS (GB)**

(54) **MODEL DETERMINATION METHOD AND RELATED APPARATUS**

(57)    Disclosed in the present application are a model determination method and a related apparatus. An object type of an object in an image is recognized, a first image sample feature of a first image sample is determined by means of an initial encoder, and on the basis of the first image sample feature, a second image sample feature which has a scene parameter value different from that of the first image sample feature but corresponds to the same recognition label as the first image sample feature is generated. For the two image sample features, corresponding texture images are obtained by means of an initial decoder, respective corresponding object type prediction results are determined by means of an initial classifier according to the image sample features and the corresponding texture images, and an initial recognition model is trained on the basis of a recognition loss function generated by the recognition label and the prediction results, so as to obtain a recognition model. When performing object recognition, the recognition model, which is trained by means of the method, has a relatively good generalization capability for cross-scene recognition and cross-attack-type recognition, thereby effectively improving model recognition accuracy.

EP 4 607 475 A1

**(Cont. next page)**

| | S201 |
|---|---|
| Obtain a first sample image , where the first sample image has an identification tag identifying an object type to which an object in the first sample image belongs | |

| | S202 |
|---|---|
| Input the first sample image to an initial identification model, to obtain a first sample image feature of the first sample image | |

| | S203 |
|---|---|
| A server generates a second sample image feature based on the first sample image feature, where the second sample image feature and the first sample image feature have different scene parameter values and correspond to the same identification tag | |

| | S204 |
|---|---|
| Input the first sample image feature and the second sample image feature to the initial Identification model, to obtain a first texture image corresponding to the first sample image feature and a second texture image corresponding to the second sample image feature | |

| | S205 |
|---|---|
| Input the first sample image feature and the first texture image to the initial classifier to obtain a first prediction result of the object type, and input the second sample image feature and the second texture image to the initial classifier to obtain a second prediction result of the object type | |

| | S206 |
|---|---|
| Determine a first difference between the first prediction result the identification tag and a second difference between the second prediction result and the identification tag | |

| | S207 |
|---|---|
| Train the initial identification model with the first and second differences, to obtain an updated identification model | |

FIG. 2

**Description**

RELATED APPLICATION

This application claims priority to Chinese Patent Application No. 2023102602211, entitled "MODEL DETERMINING METHOD AND RELATED APPARATUS", and filed with the China National Intellectual Property Administration on March 07, 2023.

FIELD OF THE TECHNOLOGY

This application relates to the field of artificial intelligence, and in particular, to a model training technology.

BACKGROUND OF THE DISCLOSURE

An identification model is a model for identifying a type of an object in an image. An initial identification model is trained based on a quantity of sample images, to obtain an identification model having an identification capability. The identification model may be applied to multiple aspects of production and life.

During actual application, the identification model usually encounters a plurality of identification scenes and a plurality of attack types, and may even encounter a new identification scene and a new attack type that are never encountered during training. For example, during training, the identification model is trained based on a sample image in an indoor scene, but during actual application, an identification image encountered by the identification model may be an image in an outdoor scene. Alternatively, when the identification model is configured for identifying a living body, an attack type of a sample image used during training of the identification model is disguised from a true living body by using a photograph, but during actual application, an attack type of an identification image encountered by the identification model may be disguised from a true living body through video replay. To be specific, during actual application, the identification model encounters various identification scenes and attack types.

However, when the identification model trained in the related art identifies a type of an object in an image, facing cross-scene identification and cross-attack type identification, it is unlikely to reach a needed generalization requirement. Consequently, it is unlikely to widely apply the identification model.

SUMMARY

To solve the foregoing technical problem, this application provides a model determining method and a related apparatus, to obtain, through training, an identification model having a better generalization capability for cross-scene identification and cross-attack type identification.

Embodiments of this application disclose the following technical solutions.

According to one aspect, embodiments of this application provide a model determining method, performed by a computer device. The method includes:

inputting a first sample image feature and a second sample image feature to an initial identification model, to obtain a first texture image and a second texture image, respectively, the first sample image feature and the second sample image feature indicating a same object of a pre-defined object type and having different scene parameter values;

inputting the first sample image feature and the first texture image to the initial identification model, to obtain a first predicted object type of the object, and inputting the second sample image feature and the second texture image to the initial identification model, to obtain a second predicted object type of the object;

determining, for training the initial identification model, a first difference between the first predicted object type and the pre-defined object type and a second difference between the second predicted object type and the pre-defined object type.

According to still another aspect, embodiments of this application provide a model determining apparatus. The apparatus includes a first obtaining module, a prediction module, and a training module.

The first obtaining module is configured to input a first sample image feature and a second sample image feature to an initial identification model, to obtain a first texture image and a second texture image, respectively, the first sample image feature and the second sample image feature indicating a same object of a pre-defined object type and having different scene parameter values;

the prediction module is configured to input the first sample image feature and the first texture image to the initial identification model, to obtain a first predicted object type of the object, and inputting the second sample image feature and the second texture image to the initial identification model, to obtain a second predicted object type of the object; and

the training module is configured to determine, for training the initial identification model, a first difference between the first predicted object type and the pre-defined object type and a second difference between the second predicted object type and the pre-defined object type.

According to still another aspect, embodiments of this application provide a computer device. The computer device includes a processor and a memory.

The memory is configured to store a computer program and transmit the computer program to the processor.

The processor is configured to perform, according to the computer program, the method in the foregoing aspect.

According to still another aspect, embodiments of this application provide a computer-readable storage medium. The computer-readable storage medium is configured to store a computer program. The computer program is configured for performing the method in the foregoing aspect.

According to still another aspect, embodiments of this application provide a computer program product including a computer program. The computer program, when run on a computer device, causes the computer device to perform the method in the foregoing aspect.

It can be seen from the foregoing technical solutions that this application provides a method for training an identification model for identifying an object type of an object in an image. The first and second sample image features indicates a same object of a pre-defined object type but have different scene parameters. For the two sample image features, corresponding texture images are obtained, the first predicted object type is obtained based on the first sample image feature and the first texture image, and the second predicted object type is obtained based on the second sample image feature and the second texture image. Finally, the first difference between the first predicted object type and the pre-defined object type, and the second difference between the second predicted type and the pre-defined object type are determined, to train the initial identification model. In this way, cross-scene conversion is performed on the sample image feature, to obtain the second sample image feature that has a different scene parameter and the same identification tag as the first sample image feature, so that the initial identification model may learn a capability of identifying the same object in different scene environments during training. In addition, the cross-scene conversion is directly performed on the first sample image feature, thereby avoiding encoding processing on an additional sample, and avoiding a substantial impact on model training efficiency. When an object type is predicted, in addition to the sample image features, a texture image is further introduced, and image information is more abundantly expressed from a feature dimension and a texture dimension, so that the initial identification model learns a more accurate identification capability in a training process, and can deal with more diverse attack identification means. When the identification model obtained by training performs object identification, the identification model has a good generalization capability for images having different scenes and images generated in different modes, thereby effectively improving model identification accuracy.

BRIEF DESCRIPTION OF THE DRAWINGS

FIG. 1 is a schematic diagram of a model determining scene according to an embodiment of this application.

FIG. 2 is a method flowchart of a model determining method according to an embodiment of this application.

FIG. 3 is a schematic diagram of cross-scene conversion for a sample image feature according to an embodiment of this application.

FIG. 4 is a schematic diagram of an attention mechanism according to an embodiment of this application.

FIG. 5 is a schematic diagram of a detail-enhanced attention mechanism according to an embodiment of this application.

FIG. 6 is a specific schematic diagram of a model determining method according to an embodiment of this application.

FIG. 7 is a schematic diagram of test of an identification model according to an embodiment of this application.

FIG. 8 is a schematic diagram of an apparatus for a model determining method according to an embodiment of this application.

FIG. 9 is a structural diagram of a terminal device according to an embodiment of this application.

FIG. 10 is a structural diagram of a server according to an embodiment of this application.

DESCRIPTION OF EMBODIMENTS

The following describes embodiments of this application with reference to the accompanying drawings.

An identification model may be applied to multiple aspects of production and life. For example, a living body identification model in the identification model may identify whether a face in a face image is from a true living body, thereby verifying authenticity of a user. A false face attack is withheld by using the living body identification model, so as to effectively ensure security of a face identification system. To be specific, the living body identification model may be widely applied as an important part of the face identification system in production and life. For example, in a remote account opening process of a bank, a server determines a true identity of an account opener by using a face identification system, and a living body identification model is applied thereto. After a front end of an application obtains an image including a face of a user by using a camera, the front end of the application transmits the image including the face of the user to a back end and invokes the living body identification model, so as to perform living body identification. If it is determined that the face in the image is from a living body, a subsequent identity verification operation is performed; otherwise, direct identity verification fails. In a process of performing face payment by using the face identification system, the living body identification model may improve payment security, and the living body identification model may defend against some transaction attacks that cause losses to enterprises or individuals, thereby ensuring the security of the face payment. When community security is implemented by using the face identification system, after directly obtaining a face image on the front end, the face identification system may transmit the face image to the encapsulated living body identification model to directly perform determining.

An application value of the identification model is usually determined by generalization performance of the model. Higher generalization performance of the identification model indicates more application scenes of the model, and higher corresponding application value. Therefore, to ensure the application value of the identification model, it needs to ensure that the identification model has better generalization performance. In the related art, model training is mainly separately performed from two aspects to improve the generalization performance.

One aspect focuses on improving the generalization performance of the identification model facing a plurality of identification scenes. The plurality of identification scenes may further include an unknown identification scene (unknown domain), and the unknown domain includes characteristics such as different scenes, illumination, and acquisition device precision compared with training a sample image. This aspect mainly includes a technology of image classification domain generalization task. The model learns domain-unrelated features by using a policy such as domain confrontation training or meta-learning, so that the model obtains better generalization performance on the unknown domain. For example, for a living body identification model, a single-side domain generalization for face anti-spoofing (SSDG) algorithm exists in the related art. The algorithm uses a domain discriminator to discriminate living body face features that are extracted by a feature extractor from different domains. When the living body face features extracted by the feature extractor can well be identified by the domain discriminator as a living body face, the features are considered as cross-domain irrelevant features. Therefore, the features may have a good identification capability on the unknown domain.

Another aspect focuses on improving a detection capability of the identification model when facing a plurality of attack types, and in particular, facing a new attack type. For example, for the living body identification model, the attack types include various attack types that may provide a false face, such as a photo, a video, a face swapper, and a mask. The new attack type includes an attack type that does not appear in training sample images. In this aspect, the generalization performance of the model facing the new attack type is improved mainly by using a zero-sample learning or abnormality detection policy, so that the model learning may be generalized to an attack clue of the new attack type. For example, for the living body identification model, a deep tree learning for zero-shot face anti-spoofing (DTN) algorithm exists in the related art. The algorithm uses a zero-sample learning method. A known attack type is divided into several clusters according to semantics, and binary classification living body detection is performed in each cluster. In the face of a new attack type, an image of the new attack type is routed to a most similar cluster for binary classification, thereby improving the generalization capability of the living body identification model facing the new attack type.

However, when the identification model trained in the related art identifies a type of an object in an image during actual application, an identification scene change and a new attack type may exist at the same time. For example, the trained living body identification model is attacked by using a photo in an indoor scene, and may encounter a video replay attack in an outdoor scene during actual application. To be specific, the identification model may face a plurality of new identification scenes and new attack types, and even may encounter an unknown identification scene and new attack type at the same time. In this case, it is difficult for the model trained in the related art to reach a needed generalization requirement.

Therefore, embodiments of this application provide a model determining method and a related apparatus. In a training process, not only a capability of identifying the same object in different identification environments by an identification model is improved, but also the model learns a more accurate identification capability in the training process, so as to effectively defend against various attack types, thereby obtaining an identification model having a better generalization capability for cross-scene identification and cross-attack type identification. It is further noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

The model determining method provided in this embodiment of this application may be implemented by using a computer device. The computer device may be a terminal device or a server. The server may be an independent physical server, may be a server cluster or a distributed system including a plurality of physical servers, or may be a cloud server providing a cloud computing service. The terminal device includes but is not limited to a mobile phone, a computer, an intelligent voice interaction device, a smart home appliance, an in-vehicle terminal, an aircraft, and the like. The terminal device and the server may be directly or indirectly connected in a wired or wireless communication protocol. This is not limited in this application.

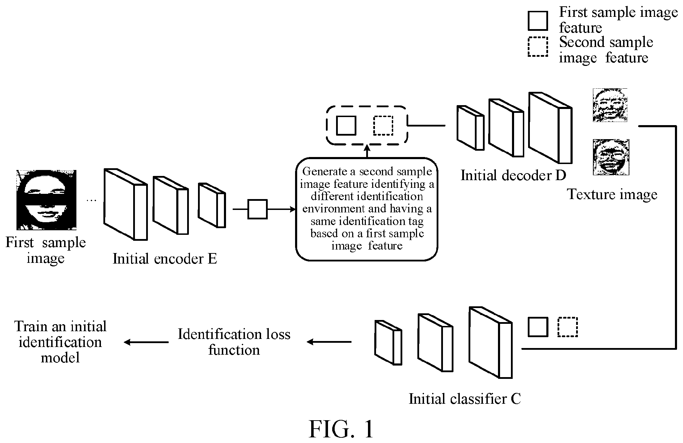

FIG. 1 is a schematic diagram of an application scene of a model determining method according to an embodiment of this application. The foregoing computer device is a server.

An identification model is a model for identifying a type of an object in an image. The identification model may be obtained by training and optimizing an initial identification model. During actual application, the identification model encounters a plurality of identification scenes and a plurality of attack types, and even encounters an unknown identification scene and a new attack type that are not encountered in a training process. However, when an identification model trained in the related art identifies an object type, it is unlikely to reach a required generalization requirement when facing cross-scene identification and cross-attack type identification, thereby reducing an application value of the identification model.

In view of this, in the method according to the embodiments of the present application, a first sample image feature and a second sample image feature is input into the initial image identification mode, to obtain a firs texture image and a second texture image, respectively. The first sample image feature and the second sample image feature indicate a same object of a pre-defined object type, and have different scene parameter values. Further, the first sample image feature and the first texture image are input to the initial identification model, to obtain a first predicted object type of the object, and the second sample image feature and the second texture image are also to the initial identification model, to obtain a second predicted object type of the object. Further, a first difference between the firs prediction result and the pre-defined object type, and a second difference between the second prediction result and the pre-defined object type are determined, for training the initial identification model.

In some embodiments of the application, a to-be-trained initial identification model may include an initial encoder E, an initial decoder D, and an initial classifier C. As shown in FIG. 1, the initial encoder E may obtain, from a sample image, an image feature that can reflect image information in a feature dimension. The initial decoder D may generate, according to the image feature, a texture image that can reflect the image information in a texture dimension. The initial classifier C may comprehensively identify an image according to the image feature and the texture image. However, it is not limited that the initial identification model must include the initial encoder E, the initial decoder D and the initial classifier C, but it merely serves as an example for ease of understanding.

In some embodiments of the present application, the server may input a first sample image to the initial encoder, to obtain a corresponding first sample image feature. In addition, to improve an identification capability of the model in different identification scenes, the server may generate a second sample image feature based on the first sample image feature. The first sample image feature and the second sample image feature identify different scene environments but have the same identification tag indicating a pre-defined object type of an object in the first sample image. For the two sample image features, corresponding texture images may be obtained by using the initial decoder, corresponding object type prediction results may be determined by using the initial classifier according to the sample image feature and the corresponding texture images, and an initial identification model is trained by using an identification loss function generated based on the object type prediction results and the identification tag, to obtain an identification model. The second sample image feature identifying a different identification environment but having the same identification tag as the first sample image feature is generated based on the first sample image feature, and the two sample image features are both used for training the initial identification model, so that a capability of identifying the same object in different identification environments by the model can be improved based on augmenting scene environments encountered by the model.

In addition, the server may directly perform cross-scene conversion on the first sample image feature. Compared with the operation of first performing cross-scene conversion on the first sample image to obtain a corresponding cross-scene sample image and then determining a corresponding second sample image feature based on the cross-scene sample image, an additional calculation amount is reduced, and the training efficiency of the model is ensured.

Furthermore, when performing object type identification by using the initial classifier, the server not only refers to a sample image feature, but also further refers to a texture image. To be specific, the initial classifier comprehensively classifies a sample image from a feature dimension and a texture dimension of an image in a training process, so that the initial identification model learns a more accurate identification capability in a training process, and then the identification model obtained by training can deal with more diverse attack identification means.

When performing object type identification, the identification model obtained by training in this embodiment has a better generalization capability for cross-scene identification and identification of various attack types, and has good identification precision.

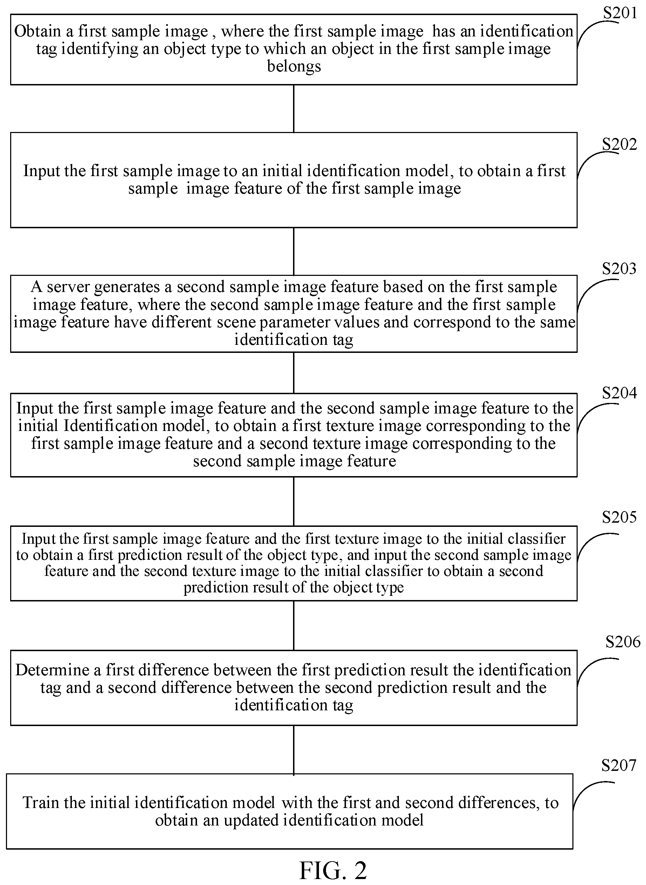

FIG. 2 is a method flowchart of a model determining method according to an embodiment of this application. The method may be performed by a computer device. In this embodiment, an example in which the computer device is a server is used for description. In other embodiments of the present application, the computer device may be a terminal device, such a laptop computer, or a mobile phone. It is noted that although operations S201 to S207 are described in the following description and shown in FIG. 2, it is not limited in the application that the method according to the embodiments must include all the steps as described; rather, the method may include some of the operations as is appropriate to the technical solutions. Therefore, the subject matter of the invention shall be ascertained based on the appended set of claims.

In some embodiments, the method may include S201, in which the server obtains a first sample image, where the first sample image has an identification tag identifying an object type to which an object in the first sample image belongs.

The first sample image is an image that may be used as a training sample, i.e. a sample image, of an initial identification model. When a to-be-trained identification model is a living body identification model, the first sample image may be various images including different persons, and specifically, may be an image including different faces, an image including different human palms, or the like. To implement supervised learning training on the initial identification model, the first sample image has a corresponding identification tag. The identification tag can identify an object type to which an object in a corresponding sample image truly belongs; for example, the object type is a pre-defined object type. For example, when the identification model is a living body identification model, an identification task of the living body identification model is to identify whether the object in the sample image is a living body. Correspondingly, the identification tag of the first sample image is configured for identifying the object in the first sample image as a living body or a non-living body. More specifically, when the identification model is a living body face identification model, an identification task of the living body face identification model is to identify whether a face in a sample image is a living body face. Correspondingly, when the object type of the face in the first sample image is a true living body, content of a corresponding identification tag is a living body face. Alternatively, when the object type of the face in the first sample image is not a living body, content of a corresponding identification tag is a non-living body face. To be specific, the identification tag can reflect a true object type to which an object in the sample image belongs.

In some embodiments, the method may include S202, in which the server inputs the first sample image to an initial identification model, to obtain a first sample image feature of the first sample image. In some embodiments, the initial identification model may include an initial encoder, an initial decoder and an initial classifier.

The identification model is a model for identifying a type of an object in an image. During actual application, the identification model includes a living body identification model configured to identify whether an object in a currently obtained image is a true living body, and may be specifically a living face identification model configured to identify whether a face in a currently obtained face image is from a true living body, or may be various identification models such as a vehicle identification model configured to identify whether a vehicle in a currently obtained vehicle image is a specific vehicle.

The initial identification model is an initial model of an identification model which may be obtained by training using a first sample image, i.e. an identification model on which model training is not completed. In some embodiments, the to-be-trained initial identification model includes an initial encoder, an initial decoder, and an initial classifier. The initial encoder, the initial decoder, and the initial classifier are an encoder, a decoder, and a classifier that need to be trained and optimized. The encoder may obtain, from an image, an image feature reflecting image information in a feature dimension. The decoder may generate, according to the image feature, a texture image reflecting image information in a texture dimension. The classifier may identify an image according to the image information in the feature dimension and the texture dimension.

The image feature refers to a series of quantifiable information reflected in an image. The image feature may be configured for representing content in the image, or content related to an identification task. In this embodiment, the first sample image feature is an image feature corresponding to the first sample image.

In some embodiments, the server determines, by using an initial encoder, a first sample image feature corresponding to a first sample image. The first sample image feature may represent, in a feature dimension, a series of information included in the first sample image. To be specific, the initial encoder may preliminarily analyze the first sample image before identifying the first sample image. The initial encoder is specifically configured to perform feature encoding on the first sample image, to obtain a corresponding first sample image feature. The feature encoding refers to converting an image into feature data that may be processed by a computer, i.e. a sample image feature. The sample image feature may reflect a characteristic of the image. Specifically, a convolutional neural network structure may be used as the foregoing initial encoder, and another convolutional neural network structure may be used as the foregoing initial decoder, which is not limited in the specification. The initial classifier may be implemented by using a fully-connected layer, a softmax activation function, a sigmoid activation function, or a suitable combination thereof. Sample image features are extracted layer by layer from inputted sample images by using a plurality of cascaded convolutional layers in the convolutional neural network structure. Finally, a sample image feature outputted by the last convolutional layer is used as the foregoing first sample image feature.

In some embodiments, the method may further include S203, in which the server generates a second sample image feature based on the first sample image feature, where the second sample image feature and the first sample image feature have different scene parameter values and correspond to the same identification tag.

A scene parameter value of a sample image feature is configured for reflecting content in an image other than a to-be-identified object, and may further be understood as background content in the image other than the object. For example, the scene parameter value may include content such as a background, illumination, and precision of an acquisition device reflected in the image. Correspondingly, the scene parameter may be a background parameter, for example, an image parameter for reflecting background content of a face in the image. Further, the scene parameter may be a parameter reflecting a background type, brightness, contrast, definition, and the like. A sample image may be defined by a scene parameter. In embodiments of this application, a first sample image corresponding to a first sample image feature and a second sample image corresponding to a second sample image feature are defined by different scene parameters. The two sample images have different scene information, for example, have different content such as a background, illumination, an acquisition environment, and an acquisition device parameter.

When the identification model identifies an image, the identification model is affected by a scene environment in the image. For example, when a sample image is an image acquired in an environment with sufficient light, the identification model obtained through training by using the sample image has a better identification capability for an image with sufficient light during actual application. However, if the image with insufficient light is encountered, even if an object included in the image is the same as an object included in the sample image, the identification model may not accurately identify the image. Therefore, a capability of identifying an object type of an object in different scene environments by the identification model needs to be improved.

In view of this, in some embodiments, a second sample image feature may be generated based on the first sample image feature, where the second sample image feature and the first sample image feature have different scene parameters but correspond to the same identification tag, i.e., they indicate a same object of a pre-defined object type. The second sample image feature corresponds to a second sample image, where the second sample image is a training sample that has a different scene environment and the same identification tag as the first sample image. In some embodiments, the scene environment of the second sample image is different from the scene environment of the first sample image. For example, the first sample image may have an indoor scene and the second sample image may have an outdoor scene. The identification tag of the second sample image and the identification tag of the first sample image are the same, which indicates that objects included in the two sample images are of the same object type and may be the same object. For example, when the identification model is a living body identification model, if the object type of a face in the first sample image is a living body face, the object type of a face in the second sample image may be a living body face, and the faces may be the same face. The second sample image corresponding to the same identification tag as the first sample image is obtained, and the second sample image and the first sample image are both used for training the initial identification model in a subsequent operation, helping the initial identification model to better identify an invariant feature from the same object in a subsequent training process, thereby improving a capability of the identification model to identify the same object in different scene environments.

In some embodiments, the server directly generates the second sample image feature based on the first sample image feature determined in S202 instead of first performing scene conversion on the first sample image to obtain a corresponding second sample image and then determining a corresponding second sample image feature based on the second sample image. The reason for this processing is that encoding the second sample image by using the initial encoder additionally increases a calculation amount in a model training process, thereby affecting model training efficiency. In addition, the first sample image feature can fully reflect information in the sample image, Therefore, more image features in the original first sample image may be reserved for the second sample image feature obtained by using the first sample image feature.

The second sample image feature is generated based on the first sample image feature of the first sample image. Since the second sample image corresponding to the second sample image feature and the first sample image have different scene environments, a scene environment encountered during model training can be augmented, and a capability of identifying the same object in different scene environments by the model can be improved.

In a possible implementation, one round of training of the initial identification model may include M (M is an integer greater than 1) first sample images. During actual application, iterative training needs to be performed for the initial identification model. To be specific, a training process of the initial identification model includes a plurality of iteration rounds. In each iteration round, the initial identification model may be trained by using the M first sample images. To be specific, the M first sample images may be inputted into the to-be-trained initial identification model. In this way, one round of training of the initial identification model may include M first sample images.

A jth (j is an integer greater than or equal to 1 and less than or equal to M) first sample image in the M first sample images is used as an example for description. The operation in S203 that the server generates a second sample image feature based on the first sample image feature specifically includes the following operations.

S11: The server determines, for each other first sample image than the jth first sample image in the M first sample images, a feature similarity between the jth first sample image and the other first sample images on the first sample image feature.

The first sample image feature is an image feature corresponding to the first sample image, and the second sample image feature is an image feature that has a different scene parameter but corresponds to the same identification tag as the first sample image feature. Since the first sample image feature and the second sample image feature have different scene parameters, the second sample image feature generated based on the first sample image feature needs to be greatly different from the first sample image feature.

In view of this, for the jth first sample image, the server may first determine a feature similarity between the first sample image features corresponding to the remaining M-1 first sample images in the M first sample images and the first sample image corresponding to the jth first sample image. The feature similarity is configured for representing a similarity degree of different first sample images in an image feature dimension. A higher similarity between first sample image features of different first sample images indicates a larger value of the corresponding feature similarity. The feature similarity may be a cosine similarity. For example, first sample image features of the same batch of sample images are first pooled into a sample feature vector v. Then, the cosine similarity between sample images in the same batch may be determined by using the following formula:

$$S = \text{Softmax}\left(\frac{v}{\|v\|_2} \cdot \frac{v^T}{\|v\|_2}\right)$$

where S represents the cosine similarity between sample images in the same batch, Softmax represents a normalization function, v represents the sample feature vector v determined by pooling the first sample image features of the same batch of sample images, $v^T$ represents a transposed matrix of v, and $\|v\|_2$ represents a two-norm of v.

S12: The server determines another first sample image having a feature similarity less than a similarity threshold as a differentiated sample.

The server may determine a first sample image having the feature similarity lower than a similarity threshold in the M-1 first sample images as a differentiated sample. The differentiated sample is the first sample image greatly different from the jth first sample image. Since the second sample image feature generated based on the first sample image feature needs to be greatly different from the first sample image feature, the foregoing differentiated sample may be used as a basis for generating the second sample image feature. For example, when the feature similarity is a cosine similarity, the differentiated sample may be determined by using the following formula:

$$H_{j,k} = 1[S_{j,k} < median(S_{j,.})]$$

where $H_{j,k}$ represents the first sample image feature corresponding to a kth first sample image (the kth first sample image is the differentiated sample of the jth first sample image) in the M first sample images, 1[·] represents an indicator function, $S_{j,k}$ represents the cosine similarity between the jth first sample image and the kth first sample image, $S_{j,.}$ represents the cosine similarity between the jth first sample image and all the M-1 first sample images, and median($\alpha$) represents calculating a median for $\alpha$.

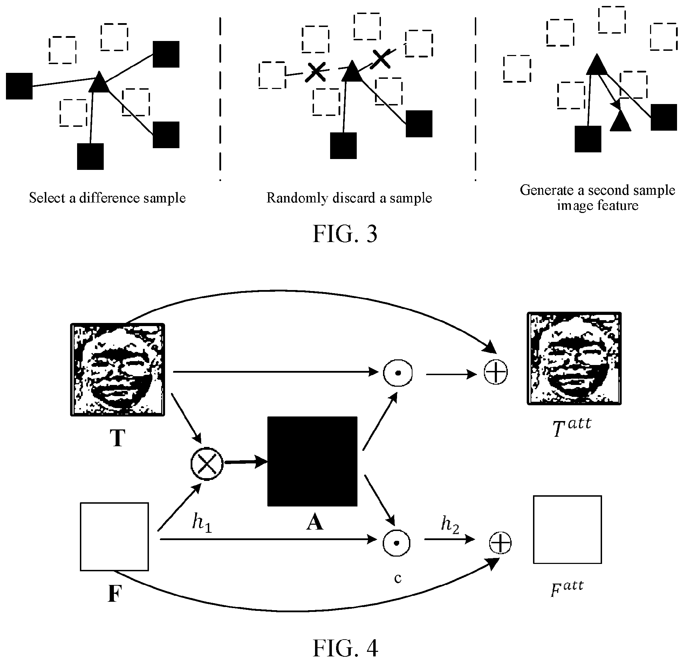

By using the formula, the similarity threshold may be determined as a median of the cosine similarity between the jth first sample image and the remaining M-1 first sample images, and a sample image having the cosine similarity lower than the median in the M-1 first sample images as the differentiated sample. As shown in FIG. 3, the first sample image greatly different from the jth first sample image is determined as the differentiated sample.

S13: The server generates a second sample image feature of the jth first sample image according to the first sample image feature of the differentiated sample and the first sample image feature of the jth first sample image.

After the differentiated sample is determined, the second sample image feature and the first sample image feature have different scene parameters, but have the same identification tag. Therefore, although the second sample image feature and the first sample image feature need to be greatly different with respect to the features of the scene environment, a high similarity between the second sample image feature and the first sample image feature with respect to the features of the identification tag is required. In view of this, the server cannot directly generate the second sample image feature according to the first sample image feature of the differentiated sample, but generates the second sample image feature for the $j^{th}$ first sample image according to the respective first sample image features of the differentiated sample and the $j^{th}$ first sample image.

Furthermore, to further improve diversity of the second sample image feature, after the differentiated samples are determined, a particular quantity of differentiated samples may be randomly discarded first. For example, as shown in FIG. 3, half of the differentiated samples may be randomly discarded, and then the second sample image feature for the $j^{th}$ first sample image is generated according to the remaining differentiated samples and the $j^{th}$ first sample image.

The server first determines a differentiated sample greatly different from a first sample image, and then generates a second sample image feature for the first sample image according to first sample image features corresponding to the differentiated sample and the first sample image. To be specific, the second sample image feature having a scene parameter different from that of the first sample image feature is obtained, thereby implementing extension of a sample image in a scene environment.

**In** the process of generating a second sample image feature, it needs to be ensured that the second sample image corresponding to the second sample image feature and the first sample image have the same identification tag. Therefore, in a possible implementation, the operation in S13 that the server generates a second sample image feature of the $j^{th}$ first sample image according to the first sample image feature of the differentiated sample and the first sample image feature of the $j^{th}$ first sample image specifically includes the following operations.

S21: The server generates an initial second sample image feature according to the first sample image feature of the differentiated sample and the first sample image feature of the $j^{th}$ first sample image.

The server may first generate, according to the respective first sample image features of the differentiated sample and the $j^{th}$ first sample image (for example, the first sample image feature of the differentiated sample and the first sample image feature corresponding to the $j^{th}$ first sample image are mixed or combined or spliced), an initial second sample image feature for the $j^{th}$ first sample image. The initial second sample image feature is an image feature having different feature information from the first sample image feature of the $j^{th}$ first sample image. The initial second sample image feature carries the feature information of the first sample image feature of the differentiated sample, and since the initial second sample image feature is not equivalent to the second sample image feature and is essentially an intermediate feature in the process of generating the second sample image feature, it is not necessary to ensure that the initial second sample image feature and the first sample image feature represent the same object. For example, the initial second sample image feature for the $j^{th}$ first sample image may be obtained according to the following formula:

$$V' = \frac{S'}{||S'||_1} \times V$$

where

$$S' = \mathrm{Dropout}(H \ast S)$$

where H represents the first sample image feature of the differentiated sample of the $j^{th}$ first sample image, S represents the cosine similarity between the first sample images in the same batch, $\alpha \ast \beta$ represents an element-by-element product of $\alpha$ and $\beta$, Dropout represents a discarding function, S' represents the first sample image feature of the remaining discarded differentiated samples, $||S'||_1$ represents a one-norm of S', V represents the first sample image feature of the $j^{th}$ first sample image, and V' represents an initial second sample image feature of the $j^{th}$ first sample image.

In the formula, to further improve diversity of the second sample image feature, not all the differentiated samples are directly used, but the remaining differentiated samples randomly discarded are used. Then one-norm regularization is used on the first sample image features of the remaining differentiated samples, to ensure that a sum of all rows is 1. The initial second sample image feature of the $j^{th}$ first sample image is determined in conjunction with the first sample image feature of the $j^{th}$ first sample image.

S22: The server uses the first sample image feature of the $j^{th}$ first sample image as a mixing constraint, and mixes the first sample image feature of the $j^{th}$ first sample image and the initial second sample image feature, to obtain the second sample image feature of the $j^{th}$ first sample image.

The second sample image feature needs to be generated with reference to the first sample image feature of the differentiated sample. Due to the impact of the first sample image feature of the differentiated sample, the generated second sample image feature and the first sample image feature of the $j^{th}$ first sample image may correspond to different identification tags. In a case that the two features correspond to different identification tags, subsequent operations cannot be performed normally. To be specific, the identification tag of the $j^{th}$ first sample image and the second prediction result determined based on the second sample image feature cannot be used for constructing a loss function, and the initial identification model is trained accordingly. To avoid the foregoing situation, operation S22 needs to be used for constraining the generated second sample image feature based on the first sample image feature of the $j^{th}$ first sample image in the process of generating the second sample image feature, to ensure that the generated second sample image feature and the first sample image feature correspond to the same identification tag.

Specifically, after the initial second sample image feature having feature information significantly different from that of the first sample image feature is generated, to ensure that the first sample image feature and the second sample image feature represent the same object, the server may use the first sample image feature of the $j^{th}$ first sample image as a mixing constraint in the process of mixing the first sample image feature of the $j^{th}$ first sample image and the initial second sample image feature, which indicates that the first sample image feature of the $j^{th}$ first sample image and the initial second sample image feature are not randomly mixed. However, by using the original first sample image feature of the $j^{th}$ first sample image as a constraint, it is ensured that the obtained second sample image feature and the first sample image feature represent the same object. To be specific, it is ensured that the first sample image corresponding to the first sample image feature and the second sample image corresponding to the second sample image feature have the same identification tag. For example, when the identification model identifies a living body, the first sample image feature is used as a mixing constraint to ensure that the second sample image corresponding to the obtained second sample image feature and the first sample image represent the same face, thereby avoiding that the obtained second sample image feature is incorrect when the identification tag of the first sample image feature is used as a corresponding true value in subsequent operations, ensuring that the initial identification model may be directly trained and optimized according to the second sample image feature and the identification tag in subsequent operations, and helping the model to better identify an invariant feature from the same object in a subsequent training process. As shown in FIG. 3, the feature information of the first sample image feature and the initial second sample image feature may be mixed by using an exact feature distribution mixing (EFDMix) technology, so as to ensure that the feature information of the first sample image feature about the identification tag remains unchanged to obtain the corresponding second sample image feature. Also, the first sample image feature and the initial second sample image feature may be mixed by using an adaptive instance normalization (AdaIN) algorithm.

An initial second sample image feature having different feature information from that of a first sample image feature of a $j^{th}$ first sample image is first directly generated. Then, in a process of mixing the first sample image feature and the initial second sample image feature, an original first sample image feature is used as a mixing constraint, so that the obtained second sample image feature and the first sample image feature represent the same object. To be specific, a second sample image corresponding to the second sample image feature and the first sample image have the same identification tag, thereby avoiding that the obtained second sample image feature is incorrect when the identification tag of the first sample image feature is used as a corresponding true value in subsequent operations, and ensuring that the initial identification model may be directly trained and optimized according to the second sample image feature and the identification tag in the subsequent operations.

In some embodiments, the method may further include S204, in which the server inputs the first sample image feature and the second sample image feature to the initial identification model, to obtain a first texture image corresponding to the first sample image feature and a second texture image corresponding to the second sample image feature.

A texture image is an image that can reflect texture of an image. For example, the texture image includes local binary pattern (LBP) images, as well as other LBP variant images such as color LBP images, and LBP in an HSV color space or a YCbCr color space. Texture is an image feature that can reflect distribution attributes of pixels in an image, and may be expressed by a gray distribution of the pixels and surrounding spatial neighborhoods thereof. The texture of the image is usually locally irregular and macroscopically regular. The image can be more abundantly expressed in the texture dimension by obtaining the texture image of the image. In this embodiment, the first texture image is a texture image corresponding to the first sample image feature, and the second texture image is a texture image corresponding to the second sample image feature.

In some embodiments, the first texture image corresponding to a sample image according to a first sample image feature may be obtained by the initial encoder. The first sample image feature refers to a series of information reflected by the sample image in a feature dimension, and the first texture image refers to visual information reflected by the sample image in a texture dimension. To be specific, in this embodiment, in addition to performing analysis processing on the sample image in the feature dimension, analysis processing is further performed in the texture dimension. To be specific, before identifying the object type of the object in the sample image, the initial identification model performs analysis processing on the sample image in both the feature dimension and the texture dimension.

Furthermore, in some embodiments, a corresponding second texture image may be further obtained by the initial encoder according to a second sample image feature. The second sample image feature refers to a series of information reflected by a second sample image in a feature dimension, and the second texture image refers to visual information reflected by the second sample image in a texture dimension. To be specific, in this embodiment, in addition to obtaining information of the second sample image in the feature dimension, information of the second sample image in the texture dimension is further obtained, so that corresponding information is obtained in two dimensions, i.e. feature and texture, before the second sample image is identified.

In some embodiments, the initial decoder is configured to perform feature decoding according to the sample image feature. The feature decoding is a reverse process of feature encoding, and is configured for restoring a sample image feature in a data form to a texture image in an image form.

In some embodiments, the method may further include S205, in which the server inputs the first sample image feature and the first texture image to the initial classifier to obtain a first prediction result of the object type, and inputs the second sample image feature and the second texture image to the initial classifier to obtain a second prediction result of the object type.

An object type prediction result is a prediction result of an object type of an object in an image that is obtained after the image is identified by using a model. The prediction result may be a probability value. For example, when the identification model is a living body identification model, the object type prediction result obtained after a face image is identified by using the living body identification model may be that a probability of a living body is 0.7. In this embodiment, the first prediction result is the object type identification result corresponding to the first sample image, and the second prediction result is the object type identification result corresponding to the second sample image. In embodiments, the first prediction result indicates a first predicted object type of the object, and the second prediction result indicates a second predicted object type of the object. In other words, the first sample image feature and the first texture image are inputted to the initial classifier to obtain the first predicted object type of the object, and the second sample image feature and the second texture image are inputted to the initial classifier to obtain the second predicted object type of the object. In some embodiments, the first/second prediction result may be considered equivalent to first/second predicted object type.

In a training process of an identification model in the related art, a prediction result of a corresponding object type is usually determined only according to a sample image feature of a sample image. Consequently, a capability of identifying information in an image by the identification model obtained by training is insufficient. Consequently, when the identification model obtained by training in the related art faces cross-attack type identification, it is difficult to reach a needed generalization requirement.

During actual application, the identification model may encounter various attack types, or even encounter a new attack type that is not trained in a training process. Therefore, to learn a more accurate identification capability in the training process of the initial identification model, in this embodiment, the server determines the first prediction result of the object type through the initial classifier according to the first sample image feature and information in two dimensions of the first texture image. To be specific, in this embodiment, the initial classifier obtains a corresponding first prediction result instead of obtaining a prediction result corresponding to the first sample image only according to the first sample image feature, but obtains a corresponding first prediction result by comprehensively considering the first sample image feature and the first texture image. To be specific, the model comprehensively classifies a sample image from a feature dimension and a texture dimension in a training process, so that the initial identification model more precisely and comprehensively refers to information in the sample image in the training process, and classifies the sample image accordingly.

Furthermore, in this embodiment, the initial classifier further determines the second prediction result of the object type corresponding to the second sample image according to the second sample image feature and information in two dimensions of the second texture image. To be specific, the initial classifier further comprehensively considers the second sample image feature and the second texture image to obtain the second prediction result of the corresponding object type. To be specific, the model further comprehensively classifies a cross-scene sample image from the feature dimension and the texture dimension in the training process, so that the initial identification model more precisely and comprehensively refers to the information in the second sample image in the training process, and classifies the cross-scene sample image accordingly.

In a possible implementation, the initial identification model further includes an initial feature embedding module. The operation in S204 that the server inputs the first sample image feature and the first texture image to the initial classifier, to obtain a first prediction result of the object type specifically includes the following operations.

The server inputs the first sample image feature to the initial feature embedding module, to obtain a corresponding first embedded feature.

The server inputs the first embedded feature and the first texture image to the initial classifier, to obtain the first prediction result.

The initial feature embedding module is a feature embedding module that needs to be trained and optimized. The feature embedding module may secondarily extract the image feature, to obtain a more precise embedded feature. The embedded feature is a feature that can more accurately reflect image content information.

To further improve quality of data that is inputted to and processed by the initial classifier, the server may determine the corresponding first embedded feature according to the first sample image feature by using the initial feature embedding module. To be specific, the sample image feature is secondarily processed by using the initial feature embedding module, to obtain the embedded feature that can more accurately reflect the image content information.

Based on the first embedded feature obtained by using the initial feature embedding module, the first embedded feature and the first texture image may be inputted to the initial classifier, so that the initial classifier performs classification and identification accordingly. In this embodiment, the first embedded feature that is more accurate than the first sample image feature is inputted to the initial classifier, helping the initial classifier to obtain a more accurate type identification result.

Furthermore, in this embodiment, by using the initial feature embedding module, a corresponding second embedded feature may further be obtained according to the second sample image feature, and the second embedded feature and the second texture image may be jointly inputted to the initial classifier, to determine the second prediction result of the object type.

Based on obtaining the sample image feature, the server secondarily analyzes the sample image feature by using the initial feature embedding module, to obtain an embedded feature that can more accurately reflect the image content information, thereby improving quality of data inputted to the initial classifier, and helping the initial classifier to obtain a more accurate type identification result.

In some embodiments, the method may further include S206, in which the server determine a first difference between the first prediction result and the identification tag and a second difference between the second prediction result and the identification tag, to train the initial identification model.

The first prediction result is a prediction result of an object type of an object in the first sample image obtained after the first sample image is identified by using the initial identification model. The second prediction result is a prediction result of an object type obtained after the second sample image feature and the second texture image are identified by using the initial classifier in the initial identification model. The identification tag is a tag identifying a true object type of the object in the first sample image. In other words, in this step, a first difference between the first predicted object type of the object and the pre-defined object type indicated by the identification tag, and a second difference between the second predicted object type of the object and the pre-defined object type indicated by the identification tag are obtained, for training the initial identification model. In some embodiments, the server may obtain, based on the foregoing difference between the prediction result obtained by using the initial identification model and the identification tag, an identification loss function that may reflect a training optimization direction of the initial identification model, and use this identification loss function for the training of the initial identification model. In some embodiments, the identification loss function may be a weighted sum of a first identification loss sub-function and a second identification loss sub-function. The first identification loss sub-function may be a function reflecting the first difference, and the second identification loss sub-function may be a function reflecting the second difference. For example, the first and second identification loss sub-function are respectively obtained based on the first prediction result and the second prediction result, in combination with the identification tag, according to a predetermined function. For example, for the initial identification model, the identification loss sub-function may be obtained by using the following formula:

$$L_{CE} = -[y\log(y') + (1 - y)\log(1 - y')]$$

where $L_{CE}$ refers to the identification loss sub-function, y refers to the identification tag, and y' refers to the first prediction result or the second prediction result. The identification loss function of the initial identification model may be obtained by using the foregoing formula. For example, when the identification model identifies a living body, the object in the sample image is a true living body, and a value of the corresponding identification tag is 1. If a probability value of the first prediction result of the sample image is 0.8, the corresponding identification loss sub-function may be calculated according to the identification tag and the first prediction result by using the foregoing formula.

Since the second sample image feature is generated based on the first sample image feature, in the process of generating an identification loss function based on a difference between each of the first prediction result and the second prediction result and the identification tag, the server may apply a particular weight to a loss (identification loss sub-function) corresponding to the second prediction result.. It is understood that the weight applied to the loss corresponding to the first prediction result may be higher than that applied to the loss corresponding to the second prediction result, so that the identification loss function still uses an actually obtained sample image as a main training sample. For example, a weight, for example, 0.1, is applied to the loss corresponding to the second prediction result, while a weight, for example, 0.9 or 1, is applied to the loss corresponding to the first prediction result.

In some embodiments, the method may further include S207 in which, the server trains the initial identification model with the first and second differences, to obtain an updated identification model.

After the first and second differences are obtained in S205, the server may train the initial identification model based on the first and second differences. In some embodiments, the identification loss function can be obtained based on the first and the second differences. Since the identification loss function may reflect the training optimization direction of the initial identification model, the server may train the initial identification model according to the identification loss function, to obtain an applicable identification model.

Since the identification loss function is obtained comprehensively according to the first prediction result and the second prediction result and the first prediction result and the second prediction result correspond to the first sample image

and the second sample image, the identification model obtained through training by using the identification loss function can achieve a better generalization capability in the face of cross-scene identification. In addition, since the foregoing prediction result is obtained by comprehensively identifying the feature dimension and the texture dimension, the identification model obtained through training by using the identification loss function has a more accurate and more comprehensive identification capability, and can deal with diverse identification attack means. In conclusion, the identification model has a better generalization capability for cross-scene identification and identification of various attack types.

In the process of identifying sample image features and texture images in different dimensions by using an initial classifier to obtain a prediction result of an object type, if information-level interaction can be better performed on the sample image features and the texture images, a more accurate type identification result can be obtained. In a possible implementation, obtaining the first prediction result/first predicted object type may include the following operations.

S31: The server maps the first sample image feature to a feature space of the first texture image, to obtain a mapped sample feature.

The first sample image feature is a series of information reflected in the feature dimension by the first sample image, the first texture image is visual information in an image reflected in the texture dimension by the first sample image, and the first sample image feature and the first texture image are not in the same feature space. Therefore, to perform information-level interaction on the first sample image feature and the first texture image in the same feature space, the server may map the first sample image feature to the feature space of the first texture image, to obtain a mapped sample feature in the feature space of the first texture image. The mapped sample feature and the first sample image feature have the same image information and can reflect content of the sample image in the feature dimension, as shown in FIG. 4. In FIG. 4, F represents the first sample image feature, and T represents the first texture image. F is projected to a space having the same channel dimensionality as T by using a $1 \times 1$ convolutional neural network $h_1$. To be specific, F is projected to the feature space of T, to obtain a mapped sample feature F'.

S32: The server determines a sample attention map based on feature distributions of the mapped sample feature and the first texture image for the same image region, where the sample attention map is configured for identifying an attention weight corresponding to an image region in the first sample image in an object type identification task.

The mapped sample feature and the first texture image that are located in the same feature space both have corresponding feature distributions for the image region of the first sample image. Since the mapped sample feature and the first texture image reflect content of the image region from different dimensions, feature scores of the mapped sample feature and the first texture image for the same image region are usually different. For example, when the feature distribution of the mapped sample feature for an image region has more feature information, the feature distribution of the first texture image for the image region may have more feature information, or may have less feature information.

In view of this, the server may determine, based on the feature distributions of the mapped sample feature and the first texture image for the same image region, the sample attention map capable of comprehensively reflecting the feature distribution of the first sample image. The sample attention map is configured for identifying an attention weight corresponding to the image region in the first sample image in an object type identification task. More specifically, an attention weight of the image region for the identification object type in the sample image under the guidance of the feature distributions of the mapped sample feature and the first texture image is identified. The attention weight helps the initial classifier to subsequently comprehensively perform better classification and identification according to the mapped sample feature and the first texture image. For example, when the feature distribution of the mapped sample feature for an image region has more feature information and the feature distribution of the first texture image for the image region also has more feature information, an attention weight of the image region reflected by the sample attention map is relatively high. As the attention weight of the image region is higher, more attention is allocated to the image region when the object type is identified by the initial classifier in subsequent operations, so that a corresponding type identification result is more accurate. To be specific, the mapped sample feature and the first texture image are interacted at an information level, to obtain an attention map that can guide identification of the initial classifier. As shown in FIG. 4, a sample attention map A may be obtained by performing matrix multiplication on a mapped sample feature F' and the first texture image T.

S33: The server generates an attention sample feature according to the mapped sample feature and the sample attention map, and generates an attention texture image according to the first texture image and the sample attention map.

After obtaining the sample attention map, the server may generate an attention sample feature corresponding to the mapped sample feature and an attention texture image corresponding to the first texture image by using the sample attention map. The attention sample feature is supplemented with feature information of the first texture image based on the mapped sample feature by using the sample attention map. The attention sample feature carries the feature information of the first texture image. The attention texture image is supplemented with feature information of the mapped sample feature based on the first texture image by using the sample attention map. The attention texture image carries the feature information of the mapped sample feature. Therefore, the mapped sample feature and the first texture feature complete feature complementation. As shown in FIG. 4, the attention map A may be applied to the mapped sample feature F' and the first texture image T, and an attention texture image $T^{att}$ and an attention sample feature $F^{att}$ may be obtained

through another $1 \times 1$ convolutional neural network $h_2$.

S34: The server inputs the attention sample feature and the attention texture image to the initial classifier, and determines the first prediction result/first predicted object type.

After obtaining the attention sample feature and the attention texture image, the initial classifier may comprehensively obtain the corresponding first prediction result according to the attention sample feature and the attention texture image. Specifically, the attention texture image $T^{att}$ and the attention sample feature $F^{att}$ may be combined by a cascade operation as an input to the initial classifier. Since the attention sample feature not only carries information of the first sample image feature, but also carries information of the first texture image, and the attention texture image not only carries information of the first texture image, but also carries information of the first sample image feature, the initial classifier can more comprehensively classify the sample image accordingly, to obtain a more reliable first prediction result.

In this embodiment, the server may map the second sample image feature to a feature space of the second texture image, to obtain a cross-scene mapped sample feature. Then, a cross-scene sample attention map is determined based on the cross-scene mapped sample feature and a feature distribution of the same image region in the second texture image. Then, a cross-scene attention sample feature is generated according to the cross-scene mapped sample feature and the cross-scene sample attention map, and a cross-scene attention texture image is generated according to the second texture image and the cross-scene sample attention map. Finally, the cross-scene attention sample feature and the cross-scene attention texture image are inputted to the initial classifier, to determine a second prediction result.

For a sample image, an attention mechanism combining a feature dimension and a texture dimension enables the first sample image feature and the first texture image to interact at an information level, to obtain an attention texture image carrying information of the first sample image feature and an attention sample feature carrying information of the first texture image. The attention texture image and the attention sample feature are used as inputs of the initial classifier, so that quality of data inputted to the initial classifier can be effectively improved, thereby improving accuracy of a corresponding class identification result.

When information in different dimensions is mixed according to an attention mechanism, to obtain, from the perspective of finer granularity, a sample attention map capable of reflecting more detailed information, in a possible implementation, the method further includes the following operations.

S41: The server divides the first sample image into N image sub-regions, where N is an integer greater than 1.

The operation S31 in which the server maps the first sample image feature to a feature space of the first texture image, to obtain a mapped sample feature specifically includes the following operations.

S42: The server determines, according to the first sample image feature, N sub-features corresponding to the N image sub-regions, and maps the N sub-features to the feature space of the first texture image, to obtain N mapped sub-features forming the mapped sample feature.

For an $i^{th}$ image sub-region in the N image sub-regions (i is an integer greater than or equal to 1 and less than or equal to N), the operation in S32 that the server determines a sample attention map based on the mapped sample feature and a feature distribution of the same image region in the first texture image specifically includes the following operations.

S43: The server obtains an $i^{th}$ mapped sub-feature corresponding to the $i^{th}$ image sub-region in the mapped sample features, and an $i^{th}$ texture grid corresponding to the $i^{th}$ image sub-region in the first texture image.

S44: The server determines, according to feature distributions of the $i^{th}$ mapped sub-feature and the $i^{th}$ texture grid, an attention sub-map corresponding to the $i^{th}$ image sub-region in the sample attention map.

Feature information included in different image regions of the first sample image is not uniform, the first sample image feature reflects an image feature of an entire image region of the first sample image, and the first texture image reflects a texture image of an entire image region of the first sample image. If the sample attention map corresponding to the entire image region of the first sample image is directly determined based on the first sample image and the first texture image that correspond to the entire image region, the obtained sample attention map may lose detailed information of some sample images.

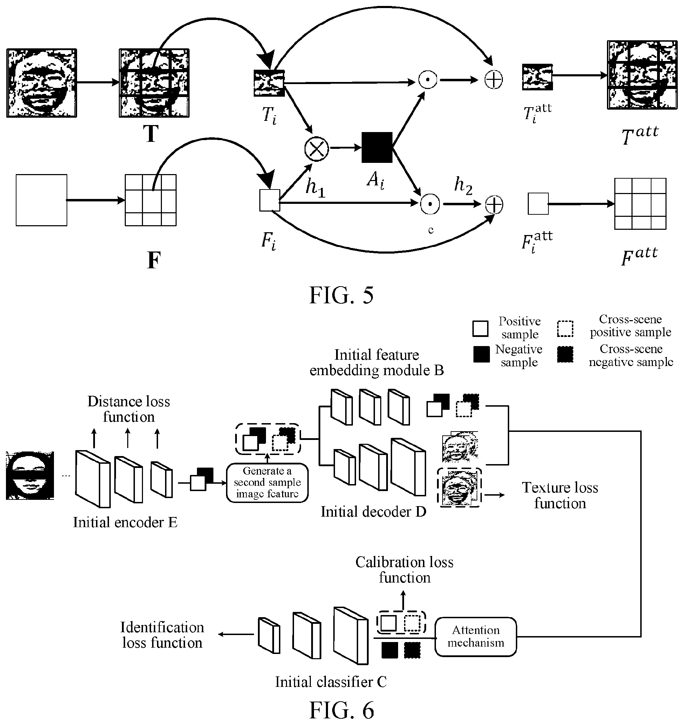

In view of this, the server may first divide the first sample image into a plurality of image sub-regions. To be specific, the first sample image is first divided. A finer image region is divided, a larger quantity of obtained image sub-regions is obtained, and more detailed information of the sample image can be better noticed by the identification model in subsequent operations. However, a calculation amount of the model also correspondingly increases. Therefore, the quantity of image sub-regions may be set by a person skilled in the art according to requirements. Meanwhile, in the division process, the image region may be evenly divided, or the image region may be unevenly divided. This is not limited herein. When the image region is evenly divided, the image region may be divided into $P \times P$ grids, where a value of P is automatically set according to a requirement. For example, P may be 2, 4, or 8. As shown in FIG. 5, the value of P may be 3, and the image region is divided into $3 \times 3$ grids.

After the first sample image is divided to obtain a plurality of image sub-regions, the server may map the first sample image feature to the feature space of the first texture image according to the plurality of image sub-regions. Specifically, sub-features corresponding to the plurality of image sub-regions are first determined in the first sample image feature, where the sub-features are image features corresponding to the image sub-regions. To be specific, the first sample image feature is first divided according to the image sub-regions, to obtain sub-features corresponding to the image sub-regions, and then the sub-features corresponding to the plurality of image sub-regions are mapped to the feature space of the first texture image, to obtain mapped sub-features corresponding to the plurality of image sub-regions, where the mapped sub-features are mapped image features corresponding to the image sub-regions, thereby laying a foundation for subsequently processing the first texture image and the mapped sample feature according to the plurality of image sub-regions in the feature space of the first texture image. As shown in FIG. 5, according to a 3×3 grid, the first sample image feature F may be divided to obtain a plurality of sub-features, where an $i^{th}$ sub-feature corresponding to an $i^{th}$ image sub-region may be represented by $F_i$. Then, $F_i$ may be projected to a space having the same channel dimensionality as the first texture image T by using a 1×1 convolutional neural network $h_1$. To be specific, $F_i$ is projected to the feature space of T, to obtain an $i^{th}$ mapped sub-feature $F_i'$ corresponding to the $i^{th}$ image sub-region.

After obtaining the mapped sub-features corresponding to the plurality of image sub-regions, the server may determine a sample attention map according to the plurality of image sub-regions. Taking the $i^{th}$ image sub-region in the plurality of image sub-regions as a schematic for specific description, an $i^{th}$ mapped sub-feature corresponding to the $i^{th}$ image sub-region and an $i^{th}$ texture grid corresponding to the $i^{th}$ image sub-region in the first texture image may be first obtained, where the $i^{th}$ mapped sub-feature is a mapped image feature corresponding to the $i^{th}$ image sub-region, and the $i^{th}$ texture grid is a texture image corresponding to the $i^{th}$ image sub-region. Then, based on the feature distributions of the $i^{th}$ mapped sub-feature and the $i^{th}$ texture grid, an $i^{th}$ attention sub-map capable of reflecting the feature distribution of the $i^{th}$ image sub-region from two dimensions is determined. As shown in FIG. 5, an $i^{th}$ attention sub-map $A_i$ may be obtained by performing matrix multiplication on an $i^{th}$ mapped sub-feature $F_i'$ and an $i^{th}$ texture grid $T_i$.

To be specific, after the image sub-regions are divided, the server may determine a corresponding attention sub-map according to the divided image sub-regions. The attention sub-map is an attention map corresponding to the image sub-region, and specifically is an attention weight of the image sub-region for the identification object type under the guidance of the feature distributions of the mapped sub-feature and the texture sub-grid corresponding to the image sub-region. To be specific, in this embodiment, instead of directly obtaining an attention weight of an entire image region of the first sample image, an attention weight of each image sub-region is obtained by means of division, and the first sample image feature and the first texture image interact with each other at an information level in more details according to the image sub-region, so that the initial classifier can subsequently notice which image sub-region features in the first sample image are more relevant to the object type identification. To be specific, the initial classifier can better notice detailed information related to the object type identification in the first sample image, thereby improving identification precision.

Furthermore, after obtaining the attention sub-map, the server may first generate, by using the attention sub-map, an attention sample sub-feature corresponding to the mapped sub-feature and an attention texture sub-grid corresponding to the texture sub-grid. As shown in FIG. 5, the $i^{th}$ attention sub-map $A_i$ is applied to the $i^{th}$ mapped feature $F_i'$ and the $i^{th}$ texture grid $T_i$ by element-by-element multiplication, and an $i^{th}$ attention sample sub-feature $F_i^{att}$ and an $i^{th}$ attention texture sub-grid $T_i^{att}$ may be obtained by residual connection. For example, $F_i^{att}$ and $T_i^{att}$ may be obtained by using the following formula:

$$T_i^{att} = \mathrm{Avg}(A_i) \otimes T_i + T_i$$

$$F_i^{att} = h_2(\mathrm{Avg}(A_i) \otimes F_i') + F_i$$

where $T_i^{att}$ represents the $i^{th}$ attention texture sub-grid, $\mathrm{Avg}(\alpha)$ represents averaging $\alpha$ in a dimension, $A_i$ represents the attention sub-map , $\otimes$ represents a Kronecker product, $T_i$ represents the $i^{th}$ texture grid, $F_i^{att}$ represents the $i^{th}$ attention sample sub-feature, $h_2$ represents a 1×1 convolutional neural network, configured to project an input to a space having the same channel dimensionality as $T_i$, $F_i'$ represents the $i^{th}$ mapped sub-feature, and $F_i$ represents the $i^{th}$ sub-feature.

Then, the attention sample sub-features are reassembled to obtain an attention sample feature, and the attention texture sub-images are reassembled to obtain an attention texture image. As shown in FIG. 5, the attention sample sub-feature $F_i^{att}$ and the attention texture sub-grid $T_i^{att}$ are reassembled to obtain a corresponding attention sample feature $F^{att}$ and attention texture image $T^{att}$, and $T^{att}$ and $F^{att}$ are combined by a cascade operation as an input o the initial classifier.

In this embodiment, the server may first divide the second sample image into a plurality of image sub-regions based on the image region of the first sample image. Then, the second sample image feature is mapped to a feature space of the second texture image according to the plurality of image sub-regions, to obtain a plurality of cross-scene mapped sub-features. Next, corresponding cross-scene attention sub-maps are determined for the plurality of image sub-regions according to the plurality of cross-scene mapped sub-features and texture grids respectively corresponding to the plurality of image sub-regions.

For a sample image, image sub-regions are divided first, and then an attention weight is determined, so that the first sample image feature and the first texture image interact with each other at an information level in more details according to the image sub-region. From the perspective of finer granularity, the initial classifier can notice which image sub-region features in the sample image are more relevant to the object type identification. To be specific, the initial classifier can better notice detailed information related to the object type identification in the sample image, thereby improving model identification precision.

It can be seen that this application provides a method for training an identification model for identifying an object type of an object in an image. A to-be-trained initial identification model includes an initial encoder, an initial decoder, and an initial classifier. Specifically, when the initial identification model is trained, a first sample image feature of a first sample image is first determined by using the initial encoder in the initial identification model. The first sample image has an identification tag identifying an object type to which an object belongs. To improve an identification capability of the model for objects in different scene environments, in this application, a second sample image feature is generated based on the first sample image feature, where the second sample image feature and the first sample image feature have different scene parameters but correspond to the same identification tag. For the two sample image features, corresponding texture images may be obtained by using the initial decoder, corresponding object type prediction results may be determined by using the initial classifier according to the sample image features and the corresponding texture images, and then an initial identification model is trained by using an identification loss function generated based on the identification tag and the prediction results, to obtain an updated identification model. Cross-scene conversion is performed on the first sample image feature, to obtain the second sample image feature that has a different scene parameter and the same identification tag as the first sample image feature, so that the initial identification model may learn a capability of identifying the same object in different scene environments during training. In addition, the cross-scene conversion is directly performed on the first sample image feature, thereby avoiding encoding processing on an additional sample, and avoiding a substantial impact on model training efficiency. When an object type is predicted, in addition to the sample image features, a texture image is further introduced, and image information is more abundantly expressed from a feature dimension and a texture dimension, so that the initial identification model learns a more accurate identification capability in a training process, and can deal with more diverse attack identification means. When the identification model obtained by training performs object identification, the identification model has a good generalization capability for images having different scenes and images generated in different modes, thereby effectively improving model identification accuracy.

In some embodiments of this application, the prediction result of the initial identification model may be measured by using the identification loss function. To be specific, a difference between a model prediction value (the prediction result) and an actual value (the identification tag) of the initial identification model is evaluated by using the identification loss function, and the initial identification model is trained by using the identification loss function, to obtain an identification model with particular identification precision.

In view of this, to further improve identification accuracy of the identification model, another type of loss function may further be introduced to train the initial identification model together with the identification loss function. In a possible implementation, the first sample image includes a positive sample and a negative sample, an identification tag of the positive sample identifies that an object in the positive sample belongs to a true object type, and an identification tag of the negative sample identifies that an object in the negative sample belongs to a false object type. Based on the texture image generated in S203, the method further includes the following operations.

The server may determine a third difference between a first texture image corresponding to the positive sample and a texture tag of the positive sample. The first texture image corresponding to the positive sample may be obtained by inputting the first sample image feature of the positive sample to the initial decoder.

Training the initial identification model may include training the initial identification model by using the first difference, the second difference, and the third difference.

In some embodiments, a texture loss function may be obtained based on the third difference. The server may train the initial identification model by using the identification loss function and the texture loss function, to obtain the updated identification model.

The first sample image is an image that may be used as a model training sample. For an initial identification model, the positive sample is a sample image in which an object included in the sample is a true object type, and the negative sample is a sample image in which an object included in the sample is a false object type. For example, when the trained identification model is configured to identify a living body, the object included in the positive sample is a true living body, and the object included in the negative sample may be a false face not belonging to a true living body, such as a video face screenshot or a face photo. If the initial identification model is trained by using only the positive sample, a false detection probability and a false identification rate of the obtained identification model are relatively high. Therefore, to reduce the false detection probability and the false identification rate of the model, the first sample image not only includes the positive sample, but also includes the negative sample.

When the initial identification model is trained, corresponding identification loss functions are obtained for both the positive sample and the negative sample by using the initial encoder, the initial classifier, and the initial identifier in the initial identification model, to obtain an identification model having an identification capability. To be specific, in S203, corresponding texture images may be obtained for both the positive sample and the negative sample through the initial decoder. In this embodiment, to enable the identification model to better distinguish a true object type from a false object type, the server measures only generation precision of the first texture image corresponding to the positive sample. To avoid that information of the negative sample interferes generation of the texture loss function related to only the positive sample, a single sample image may be processed by using instance normalization (IN) instead of using batch normalization (BN) commonly used in a convolutional neural network to process the same batch of sample images. Specifically, the server may generate the texture loss function based on the third difference between the first texture image of the positive sample and a texture tag of the positive sample. The texture tag is a texture image expected to be generated for the positive sample, i.e. a texture image that is expected by the server, can be generated by the initial identification model, and may fully reflect information of the positive sample in the texture dimension, for example, a batch of sample images $X \in \mathbb{R}^{n \times h \times w \times 3}$ for the living body identification model, where n is the number of sample images in a batch, and h, w are the height and width of the sample image. The positive sample of the living body identification model is a sample in which the included object is a true living body, and the negative sample is a sample in which the included object is a false non-living body. The texture loss function of the living body identification model may be obtained by the following formula:

$$L_{AE} = ||D\left(E\left(X^{\mathrm{live}}\right)\right) - M^{\mathrm{live}}||_1$$

where $L_{AE}$ represents the texture loss function, $X^{\mathrm{live}}$ represents a positive sample in a batch of sample images, E represents processing corresponding to the initial encoder, D represents processing corresponding to the initial decoder, $D(E(X^{\mathrm{live}}))$ represents the first texture image corresponding to the positive sample, $M^{\mathrm{live}}$ represents a texture tag of the positive sample, and $||\alpha||_1$ represents a one-norm of $\alpha$.

By using the formula, a difference between the texture tag of the positive sample and the first texture image obtained by the initial encoder and the initial decoder by processing the positive sample is evaluated. To be specific, generation precision of the first texture image of the positive sample is measured.

Although a corresponding second texture image is further generated for the second sample image corresponding to the positive sample in this application, to ensure the training efficiency of the model, the server directly generates the second sample image feature by using the first sample image feature, rather than first performing cross-scene conversion on the first sample image to obtain the corresponding second sample image, and then determining the corresponding second sample image feature by using the second sample image. If the generation precision of the second texture image is also measured, the second sample image needs to be first generated according to the second sample image feature, and then the corresponding cross-scene texture tag is generated according to the second sample image, so that the generation precision of the second texture image can be evaluated based on the cross-scene texture tag. This undoubtedly increases the calculation amount of the model. Moreover, in this application, parameters used by the initial decoder to generate the first texture image and the second texture image are the same. Therefore, based on that the generation precision of the first texture image has been evaluated, the generation precision of the second texture image does not need to be evaluated.

After obtaining the texture loss function, the server may train the initial identification model by using the identification loss function and the texture loss function together. Since the texture loss function is obtained by using a difference between the first texture image of the positive sample and the texture tag of the positive sample, only the positive sample is involved, but the negative sample is not involved. To be specific, the texture loss function is asymmetric. Training the initial identification model by using the asymmetric texture loss function enables the identification model obtained by training to better distinguish between texture images of positive and negative samples. To-be-processed images encountered by the identification model during actual use have various attack types, even a new attack type different from the negative sample in a training process. The identification model better distinguishes between the texture images of the positive and negative samples, so that when the identification model encounters a new attack type different from the negative sample, the identification model can distinguish that the new attack type is not an object type to be identified by the identification model, thereby improving a generalization capability of the identification model when facing various attack types.

A texture loss function that may measure generation precision of the texture image of the positive sample is generated by using the difference between the first texture image of the positive sample and the texture tag of the positive sample, and the initial identification model is trained by using both the asymmetric texture loss function and the identification loss function, so that the identification model obtained by training can better distinguish between the texture images of the positive and negative samples, thereby facilitating improving the generalization capability of the identification model when facing various attack types, and effectively improving identification precision of the identification model.

In a possible implementation, the texture tag of the positive sample may be obtained in the following mode: performing image texture conversion on the positive sample, to obtain the texture tag.

The texture tag is a texture image that is expected to be generated for the positive sample, i.e. a texture image that is expected by the server, can be generated by the initial identification model, and may fully reflect information of the positive sample in the texture dimension. During actual application, an image texture conversion operation may be directly performed on the positive sample, to obtain the corresponding texture tag. The image texture conversion operation is configured for performing texture conversion on the image, to obtain the texture image that may fully reflect the information of the positive sample in the texture dimension. The image texture conversion is directly performed on the positive sample, to reduce information loss caused by another operation as much as possible, and ensure reliability of the obtained texture tag. For example, grayscale processing may be directly performed on the positive sample image to obtain a corresponding grayscale map, where the grayscale map may be used as the texture tag.

The image texture conversion is performed on the positive sample, to obtain the texture tag that can fully reflect the information of the positive sample in the texture dimension, so that the texture tag may be used as a basis for calculating the texture loss function.

To further improve identification accuracy of the identification model, in addition to the texture loss function, another type of loss function may further be introduced to train the initial identification model together with the identification loss function. In a possible implementation, the first sample image includes a positive sample and a negative sample, an identification tag of the positive sample identifies that an object in the positive sample belongs to a true object type, and an identification tag of the negative sample identifies that an object in the negative sample belongs to a false object type. The method further includes the following operations.

The server obtains a first to-be-assessed feature of the positive sample and a second to-be-assessed feature of the negative sample.

The server obtains a fourth difference between the first to-be-assessed feature and an anchor feature and a fifth difference between the second to-be-assessed feature and the anchor feature. In some embodiments, the anchor feature is determined based on the positive sample.

In some embodiments, training the initial identification model may include:
training the initial identification model by using the first difference, the second difference, the fourth difference and the fifth difference.

In some embodiments, a distance loss function may be obtained based on the fourth difference and the fifth difference. The server may train the initial identification model by using the identification loss function and the distance loss function, to obtain an updated identification model. In some embodiments, the initial identification model is trained by using the distance loss function based on an optimization target of minimizing the first difference and maximizing the second difference.

To reduce the false detection probability and the false identification rate of the identification model, the first sample image includes a positive sample and a negative sample. The positive sample is a first sample image in which an object included in the sample is a true object type, the negative sample is a first sample image in which an object included in the sample is a false object type, and the positive and negative samples participate in training of the initial identification model.

The to-be-assessed feature is feature information obtained by the server from the first sample image by using the initial encoder. The first to-be-assessed feature is a to-be-assessed feature obtained from the positive sample by using the initial encoder. The second to-be-assessed feature is a to-be-assessed feature obtained from the negative sample by using the initial encoder. Since objects included in the positive sample all belong to a true object type, a distribution difference of the first to-be-assessed feature corresponding to the positive sample may be relatively small. To be specific, a distribution of the first to-be-assessed feature in the feature space may be relatively compact. Generally, there are various collection modes of the negative sample. For example, when the identification model identifies a living body, the negative sample includes various attack modes such as a video screenshot and a photo. To be specific, it is usually difficult to cluster the second to-be-assessed features corresponding to the negative sample together. In addition, object types of objects included in the positive sample and the negative sample are different. To be specific, the first to-be-assessed feature corresponding to the positive sample and the second to-be-assessed feature corresponding to the negative sample have different parts. However, the positive sample and the negative sample may have similar parts in aspects such as a scene environment. For example, when the positive sample and the negative sample are obtained by using the same acquisition device indoors, the positive sample and the negative sample have similar features at least in aspects of parameters of the acquisition device. To be specific, boundaries of the first to-be-assessed feature and the second to-be-assessed feature in the feature space are unclear. In this case, if the feature distribution of the positive sample may be further gathered and the feature distributions of the positive sample and the negative sample may be pulled apart, to generate a feature space that is more discriminative and distinctive, helping to improve the generalization capability of the identification model when facing various attack types.

In view of this, the server may generate an asymmetric distance loss function based on the fourth difference between the first to-be-assessed feature and an anchor feature and the fifth difference between the second to-be-assessed feature and the anchor feature. The anchor feature is feature information obtained from a sample used as an anchor. In this embodiment, it is expected that the feature distribution of the positive sample can be gathered and the feature distributions of the positive samples and the negative samples can be pulled apart. Therefore, in this embodiment, the anchor is determined from the positive sample. The anchor may be randomly selected from the positive sample, and correspondingly, may be determined according to feature information of the positive samples used as the anchor (for example, feature information extracted by the initial encoder from the positive sample). For example, mean pooling processing may be performed on the feature information of the positive sample used as the anchor, to obtain corresponding anchor features. The fourth difference is a difference between the first to-be-assessed feature corresponding to the positive sample and the anchor feature, and in some embodiments is a distance between the first to-be-assessed feature and the anchor feature in the feature space. The fifth difference is a difference between the second to-be-assessed feature corresponding to the negative sample and the anchor feature, and in some embodiments is a distance between the second to-be-assessed feature and the anchor feature in the feature space. In this embodiment, the foregoing difference may be measured by using a suitable distance such as a Euclidean distance or a cosine distance. The server may generate, based on the fourth difference and the fifth difference, a distance loss function for comprehensively evaluating the fourth difference and the fifth difference. For example, when a to-be-assessed feature f is a feature vector outputted by the initial encoder and subjected to global average pooling, the distance loss function may be determined by using the following formula:

$$L_{WT} = \delta \left( \sum_{f_p} w_p \, d(f_a, f_p) - \sum_{f_n} w_n \, d(f_a, f_n) \right)$$

$$w_p = Softmax \left( d(f_a, f_p) \right)$$

$$w_n = Softmax(-d(f_a, f_n))$$

where $L_{WT}$ represents the distance loss function, $\delta$ represents a softplus function, $f_a$, $f_p$, $f_n$ represent the anchor feature, the first to-be-assessed feature, and the second to-be-assessed feature, $d(\cdot, \cdot)$ is a distance measure, $d(f_a, f_p)$ represents the fourth difference, $d(f_a, f_n)$ represents the fifth difference, $w_p$, $w_n$ represent a weighting parameter of the first difference and a weighting parameter of the second difference, and Softmax represents the normalization function.

By using the foregoing formula, the distance between the anchor feature and the first to-be-assessed feature in the feature space is used as a fourth difference, and the distance between the anchor feature and the second to-be-assessed feature in the feature space is used as a fifth difference. Since a weighting parameter is configured for normalizing the fourth difference or the fifth difference, the corresponding weighting parameters are added to the fourth difference and the fifth difference, to dynamically allocate more importance to the sample. A difference between the weighted first differences corresponding to all the positive samples and the weighted second differences corresponding to all the negative samples is obtained, and a distance loss function may be obtained by processing the softplus function. When a value of the distance loss function outputted by the softplus function is close to zero, a difference generated by the weighted first differences corresponding to all the positive samples and the weighted second differences corresponding to all the negative samples is a relatively large negative number. To be specific, the weighted fourth difference is close to zero and the weighted fifth difference is a relatively large positive number. This indicates that a difference between the first to-be-assessed feature and the anchor feature is very small and a difference between the second to-be-assessed feature and the anchor feature is very large. To be specific, a distance between the positive sample and the anchor is very small and a distance between the negative sample and the anchor is very large.

After obtaining the distance loss function, the server may train the initial identification model by using the identification loss function and the distance loss function together, and in a training process, based on an optimization target of minimizing the fourth difference and maximizing the fifth difference, the feature distribution of the positive sample is gathered and the feature distributions of the positive sample and the negative sample are pulled apart by reducing the fourth difference between the first to-be-assessed feature and the anchor feature and increasing the fifth difference between the second to-be-assessed feature and the anchor feature.

In this embodiment, the feature distribution of the negative sample is not required to be gathered. This is because attack types in the negative sample are not completely the same, and it is difficult to gather the feature distributions of negative samples having different feature distributions. In addition, for negative samples including various false object types, determining a common feature distribution region also affects identification accuracy of a trained identification model for various attack types during actual use. Therefore, the feature distribution of the positive sample is gathered, and the feature distributions of the positive sample and the negative sample are pulled apart, so that a clearer boundary is generated for the feature distribution of the positive sample and the feature distribution of the negative sample in the feature space, thereby effectively improving identification precision of the identification model.

An asymmetric distance loss function may be generated according to a fourth difference between a first to-be-assessed feature of the positive sample and an anchor feature determined based on the positive sample, a second to-be-assessed feature of the negative sample and a fifth difference of the anchor feature. Further, the initial identification model is trained by using the distance loss function and the identification loss function together, and in a training process, the fourth difference is minimized and the fifth difference is maximized by using the distance loss function, to gather the feature distribution of the positive sample, and pull apart the feature distributions of the positive sample and the negative sample, thereby obtaining a feature space that is more discriminative and distinctive, helping to improve a generalization capability of the identification model when facing various attack types, thereby effectively improving identification precision of the identification model.

In a possible implementation, the initial encoder further includes a plurality of network layers in addition to an input layer, and the first to-be-assessed feature and the second to-be-assessed feature are output features of a target network layer in the initial encoder. When the target network layer is an output layer of the initial encoder, the first to-be-assessed feature is a first sample image feature of the positive sample and the second to-be-assessed feature is a first sample image feature of the negative sample.

In some embodiment, in addition to the input layer, the initial encoder may include a plurality of network layers. Based on the positive sample or the negative sample inputted through the input layer, any of the plurality of network layers may determine corresponding output features for the positive sample and the negative sample. Since scales of the output features between different layers in the plurality of network layers are different, output features of any network layer (i.e. the target network layer) for the positive sample and the negative sample may be used as the first to-be-assessed feature and the second to-be-assessed feature according to a requirement for model training, so as to generate a distance loss function corresponding to the layer, where When an output layer in the plurality of network layers generates first sample image features respectively corresponding to the positive sample and the negative sample, the first sample image features generated by the output layer for the positive sample and the negative sample may alternatively be directly used as the first to-be-assessed feature and the second to-be-assessed feature, so as to generate a distance loss function corresponding to the output layer. Even to better train and optimize the initial encoder, the distance loss function may be determined according to an output feature of each of the plurality of network layers, to train and optimize output features of different scales outputted by each layer in the initial encoder.

The corresponding distance loss function may be determined for any one of a plurality of network layers of the initial encoder, so that a to-be-trained and optimized network layer may be accurately optimized according to a model training requirement, and each layer in the initial encoder may even be trained and optimized, to better improve performance of a trained identification model.

To further improve identification accuracy of the identification model, in addition to the texture loss function and the distance loss function, another type of loss function may further be introduced to train the initial identification model together with the identification loss function. In a possible implementation, the first sample image includes a positive sample and a negative sample, an identification tag of the positive sample identifies that an object in the positive sample belongs to a true object type, and an identification tag of the negative sample identifies that an object in the negative sample belongs to a false object type. The method further includes the following operations.

The server may obtain a feature similarity between the first sample image feature of the positive sample and a second sample image feature corresponding to the positive sample.

In some embodiments, training the initial identification model may include: training the initial identification model by using the first difference, the second difference, and a feature similarity between the first sample image feature of the positive sample and a second sample image feature corresponding to the positive sample. In some embodiments, the second sample image feature corresponding to the positive sample being a second sample image feature generated based on the first sample image feature of the positive sample.

In some embodiments, the server may generate a calibration loss function based on the feature similarity, and train the initial identification model based on the identification loss function and the calibration loss function, to obtain an updated identification model.

In some embodiments, the initial identification model is trained by using the calibration loss function based on an optimization target of fixing the first sample image feature of the positive sample.

To reduce the false detection probability and the false identification rate of the identification model, the first sample image includes a positive sample and a negative sample. The positive sample is a sample image in which an object included in the sample is a true object type, the negative sample is a sample image in which an object included in the sample is a false object type, and the positive and negative samples participate in training of the initial identification model.

In S202, the server generates, based on the first sample image feature, second sample image features corresponding to different scene parameters, where the second sample image feature and the first sample image feature have different scene parameter values and correspond to the same identification tag. The second sample image feature can be obtained in the manner as described in the foregoing description. The first sample image feature and the second sample image feature are configured for training the initial identification model, so that the initial identification model may learn a capability of identifying the same object in different scene environments in a training process. During actual application of an identification model, various object type identification environments are encountered. Therefore, if an initial identification model can learn an invariant feature related to a true object type in a positive sample in a training process, the model may identify, in an actual application process, for a to-be-processed image including the true object type. According to the invariant feature, no matter how a scene environment included in the to-be-processed image changes, an object included in the to-be-processed image is the true object type, which is beneficial to improving a generalization capability of the identification model when facing various identification environments.

In view of this, the server may use the first sample image feature of the positive sample as a scale, to reduce a difference between the second sample image feature corresponding to the second sample image and the first sample image feature, so as to facilitate the initial identification model to learn the invariant feature from the first sample image feature and the second sample image feature that have a relatively small difference. Specifically, the server may generate a calibration loss function based on a feature similarity between the first sample image feature and the second sample image feature. The feature similarity is configured for representing a similarity degree between different sample images in a dimension of image features. The feature similarity may be represented by a distance between image features in a feature space. For example, suitable distance measures such as a Euclidean distance and a cosine distance may be configured for representing the feature similarity. The generated calibration loss function may reduce a difference between the second sample image feature and the first sample image feature during training of the initial identification model. For example, when the identification model identifies a living body, for a second sample image feature $f_{syn}^{live}$ corresponding to a first sample image feature $f^{live}$ corresponding to the positive sample, the calibration loss function may be determined by using the following formula:

$$ L_{Cal} = d\big(\langle f^{\mathrm{live}} \rangle, f_{syn}^{live}\big) $$

where $L_{Cal}$ represents the calibration loss function, $f^{live}$ represents the first sample image feature of the positive sample, $f_{syn}^{live}$ represents the second sample image feature of the cross-scene sample image corresponding to the positive sample, $\langle \cdot \rangle$ represents a gradient stop operation, and $d(\cdot, \cdot)$ is a distance measure.

By using the foregoing formula, a gradient stop operation may be performed on the first sample image feature, to fix the first sample image feature unchanged. To be specific, the first sample image feature is used as a scale. When the value of the calibration loss function value is close to zero, it indicates that the similarity between the second sample image feature and the fixed first sample image feature is relatively high.

After obtaining the calibration loss function, the server may train the initial identification model by using the identification loss function and the calibration loss function together. In addition, the first sample image feature is fixed in a training process. A difference between the second sample image feature corresponding to the positive sample and the first sample image feature of the positive sample is reduced by using the calibration loss function, so that the second sample image feature generated based on the first sample image feature can keep, to the greatest extent, the invariant feature related to identifying the true object type in the first sample image feature, thereby further improving the precision of cross-scene sample augmentation, so that the initial identification model can learn the invariant feature in the training process.

In this embodiment, a calibration loss function is not generated for the negative sample since attack types of the negative sample are diversified. Different attack types correspond to different invariant features related to identifying a false object type, and it is difficult for the initial identification model to learn the invariant feature related to identifying the false object type in a training process. In addition, when facing various attack types encountered by the model during actual application, if the initial identification model relatively well learns the invariant feature related to identifying a true object type in an actual application process, the obtained identification model may accurately identify the true object type in an actual use process,

A calibration loss function may be generated according to a feature similarity of the first sample image feature of the positive sample and the corresponding second sample image feature, and the initial identification model is trained by using the calibration loss function and the identification loss function together. In a training process, the first sample image feature is used as a scale, to reduce a difference between the second sample image feature and the first sample image feature, so that the second sample image feature generated based on the first sample image feature can keep, to the greatest extent, the invariant feature related to identifying the true object type in the first sample image feature, thereby improving the precision of cross-scene sample augmentation, so that the initial identification model can learn the invariant feature in the training process, thereby facilitating improving a generalization capability of the identification model when facing various identification environments, and effectively improving identification accuracy of the identification model.

To further improve identification accuracy of the identification model, in a possible implementation, the identification loss function, the texture loss function, the distance loss function, and the calibration loss function may be used together to train the initial identification model. As shown in FIG. 6A, in a training process, first sample image features corresponding to a positive sample and a negative sample are first obtained by the initial encoder E, where the distance loss function may be applied to each layer of the initial encoder E. Second, a second sample image feature may be generated based on the first sample image feature, thereby implementing cross-scene conversion of the first sample image. After the second sample image feature is obtained, on one hand, a corresponding first texture image and second texture image may be generated according to the first sample image feature and the second sample image feature by the initial decoder D, where a texture loss function for model training may be generated based on the first texture image of the positive sample. On the other hand, the initial feature embedding module B may generate a first embedded feature and a second embedded feature according to the first sample image feature and the second sample image feature. Then, information complementation is performed on the texture image and the embedded feature by using an attention mechanism, where image regions of a sample image may be divided to enhance details. Next, by using a first embedded feature of the positive sample as a scale, a difference between the first embedded feature and a second embedded feature of a cross-scene sample image corresponding to the positive sample may be reduced through the calibration loss function. Finally, a corresponding category identification result is obtained by using the initial classifier based on the embedded feature and the texture image, and the identification loss function for model training is obtained according to the category identification result and the identification tag.

In a training process, the server may obtain a total loss function for model training by combining the identification loss function, the texture loss function, the distance loss function, and the calibration loss function. For example, the total loss function may be obtained by using the following formula:

$$\mathrm{L} = L_{CE} + \lambda_{AE}L_{AE} + \lambda_{WT}L_{WT} + \lambda_{Cal}L_{Cal}$$

where $L_{CE}$ represents the identification loss function, $L_{AE}$ represents the texture loss function, $L_{WT}$ represents the distance loss function, $L_{Cal}$ represents the calibration loss function, and $\lambda_{AE}$, $\lambda_{WT}$, $\lambda_{Cal}$ are weights corresponding to the texture loss function, the distance loss function, and the calibration loss function.

By using the foregoing formula, a total loss function may be obtained by using the identification loss function, the texture loss function, the distance loss function, and the calibration loss function, and the initial identification model is trained by using the total loss function, to obtain an identification model that can have a better generalization capability for cross-scene identification and identification of various attack types.

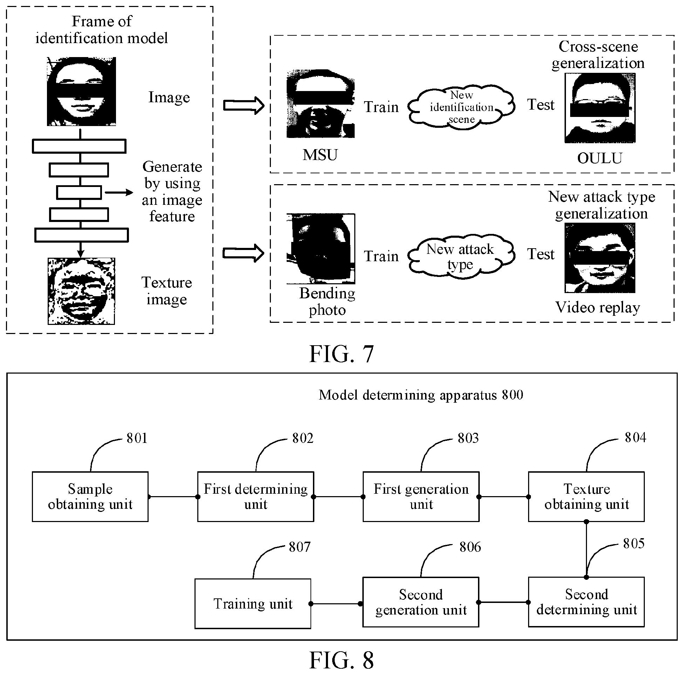

As shown in FIG. 7, a frame of an identification model having a generalization capability generates a corresponding texture image for an inputted image instead of directly performing identification and detection on the image. The texture image of the reconstructed image may help the model to identify an object in the image both in a feature dimension and a texture image dimension, and the obtained identification model has a relatively high generalization capability facing cross-scene identification and a new attack type. To verify the generalization capability of the identification model, the server may test the identification model by using a new identification scene and a new attack type that are different from those during training. Specifically, when the initial identification model is trained using samples in an MSU database, the obtained identification model may be tested using samples in an OULU database, where sample images in the MSU database and sample images in the OULU database have different identification scenes. When the initial identification model is trained by using a bending photo attack means, the obtained identification model may be tested by using a video replay attack means. The identification model obtained in this embodiment has a good result in a test of a new identification scene and a new attack type, indicating that the identification model obtained in this embodiment has a better generalization capability in cross-scene and new attack types.

FIG. 8 is a schematic diagram of a model determining apparatus according to an embodiment of this application. The model determining apparatus 800 includes a sample obtaining unit 801, a first determining unit 802, a first generation unit 803, a texture obtaining unit 804, a second determining unit 805, a second generation unit 806, and a training unit 807.

The sample obtaining unit 801 is configured to obtain a first sample image, where the first sample image has an identification tag identifying an object type to which an object in the first sample image belongs.

The first determining unit 802 is configured to input the first sample image to an initial encoder of an initial identification model, to obtain a first sample image feature of the first sample image, where the initial identification model further includes an initial decoder and an initial classifier.

The first generation unit 803 is configured to generate a second sample image feature based on the first sample image feature, where the second sample image feature and the first sample image feature have different scene parameter values and correspond to the same identification tag.

The texture obtaining unit 804 is configured to input the first sample image feature and the second sample image feature to the initial decoder, to obtain a first texture image corresponding to the first sample image feature and a second texture image corresponding to the second sample image feature.

The second determining unit 805 is configured to input the first sample image feature and the first texture image to the initial classifier to obtain a first prediction result of the object type, and input the second sample image feature and the second texture image to the initial classifier to obtain a second prediction result of the object type.

The second generation unit 806 is configured to generate an identification loss function based on a first difference between the first prediction result and the identification tag and a second difference between the second prediction result and the identification tag.

The training unit 807 is configured to train the initial identification model by using the identification loss function, to obtain an updated identification model.

In a possible implementation, when the first sample image includes a positive sample and an identification tag of the positive sample identifies that an object in the positive sample belongs to a true object type, the second generation unit 806 is further configured to generate a texture loss function based on a difference between a first texture image of the positive sample and a texture tag of the positive sample. The first texture image corresponding to the positive sample is obtained by inputting the first sample image feature of the positive sample to the initial decoder.

The training unit 806 is specifically configured to train the initial identification model by using the identification loss function and the texture loss function, to obtain the updated identification model.

In a possible implementation, the texture obtaining unit 804 is further configured to perform image texture conversion on the positive sample, to obtain the texture tag.

In a possible implementation, the second determining unit 805 is specifically configured to:

map the first sample image feature to a feature space of the first texture image, to obtain a mapped sample feature;

determine a sample attention map based on feature distributions of the mapped sample feature and the first texture image for the same image region, where the sample attention map is configured for identifying an attention weight corresponding to an image region in the first sample image in an object type identification task;

generate an attention sample feature according to the mapped sample feature and the sample attention map, and generate an attention texture image according to the first texture image and the sample attention map; and

input the attention sample feature and the attention texture image to the initial classifier, and determine the first prediction result.

In a possible implementation, the model determining apparatus 800 further includes a division unit, configured to divide the first sample image into N image sub-regions, where N is an integer greater than 1.

The second determining unit 805 is specifically configured to:

determine, according to the first sample image feature, N sub-features corresponding to the N image sub-regions, and map the N sub-features to the feature space of the first texture image, to obtain N mapped sub-features forming the mapped sample feature;

obtain, for an $i^{th}$ image sub-region in the N image sub-regions (i is an integer greater than or equal to 1 and less than or equal to N), an $i^{th}$ mapped sub-feature corresponding to the $i^{th}$ image sub-region in the mapped sample features, and an $i^{th}$ texture grid corresponding to the $i^{th}$ image sub-region in the first texture image; and

determine, according to feature distributions of the $i^{th}$ mapped sub-feature and the ith texture grid, an attention sub-map corresponding to the $i^{th}$ image sub-region in the sample attention map.

In a possible implementation, when the first sample image includes a positive sample and a negative sample, an identification tag of the positive sample identifies that an object in the positive sample belongs to a true object type, and an identification tag of the negative sample identifies that an object in the negative sample belongs to a false object type, the second generation unit 806 is further configured to:

input the positive sample and the negative sample to the initial encoder, to obtain a first to-be-assessed feature of the positive sample and a second to-be-assessed feature of the negative sample; and

generate a distance loss function based on a first difference between the first to-be-assessed feature and an anchor feature and a second difference between the second to-be-assessed feature and the anchor feature, where the anchor feature is determined based on the positive sample.

The training unit 807 is specifically configured to train the initial identification model by using the identification loss function and the distance loss function, to obtain the updated identification model. The initial identification model is trained by using the distance loss function based on an optimization target of minimizing the first difference and maximizing the second difference.

In a possible implementation, the initial encoder further includes a plurality of network layers in addition to an input layer, and the first to-be-assessed feature and the second to-be-assessed feature are output features of a target network layer in the initial encoder. When the target network layer is an output layer of the initial encoder, the first to-be-assessed feature is a first sample image feature of the positive sample and the second to-be-assessed feature is a first sample image feature of the negative sample.

In a possible implementation, the first generation unit 803 is specifically configured to perform the following operations.

In M first sample images in one round of training the initial identification model, M is an integer greater than 1. For a $j^{th}$ sample image in the M first sample images, j is an integer greater than or equal to 1 and less than or equal to M. The first generation unit 803 is specifically configured to:

determine, for each other first sample image than the $j^{th}$ first sample image in the M first sample images, a feature similarity between the $j^{th}$ first sample image and the other first sample images on the first sample image feature;

determine other first sample images having corresponding feature similarities less than a similarity threshold as differentiated samples; and

generate a second sample image feature of the $j^{th}$ first sample image according to the first sample image feature of the differentiated sample and the first sample image feature of the $j^{th}$ first sample image.

In a possible implementation, the first generation unit 803 is specifically configured to:

generate an initial second sample image feature according to the first sample image feature of the differentiated sample and the first sample image feature of the $j^{th}$ first sample image; and

use the first sample image feature of the $j^{th}$ first sample image as a mixing constraint, and mix the first sample image feature of the $j^{th}$ first sample image and the initial second sample image feature, to obtain the second sample image feature of the $j^{th}$ first sample image.

In a possible implementation, when the first sample image includes a positive sample and a negative sample, an identification tag of the positive sample identifies that an object in the positive sample belongs to a true object type, and an identification tag of the negative sample identifies that an object in the negative sample belongs to a false object type, the second generation unit 806 is further configured to:
generate a calibration loss function based on a feature similarity between the first sample image feature of the positive sample and a second sample image feature corresponding to the positive sample. The second sample image feature corresponding to the positive sample is a second sample image feature generated based on the first sample image feature of the positive sample.

The training unit 807 is specifically configured to train the initial identification model by using the identification loss function and the calibration loss function, to obtain the updated identification model. The initial identification model is trained by using the calibration loss function based on an optimization target of fixing the first sample image feature of the positive sample.

In a possible implementation, when the initial identification model further includes an initial feature embedding module, the second determining unit 805 is specifically configured to:

input the first sample image feature to the initial feature embedding module, to obtain a corresponding first embedded feature; and

input the first embedded feature and the first texture image to the initial classifier, to obtain the first prediction result.

Embodiments of this application further provide a computer device. The computer device is the computer device described above and may include a terminal device or a server. The model determining apparatus may be configured in the computer device. The following describes the computer device with reference to the accompanying drawings.

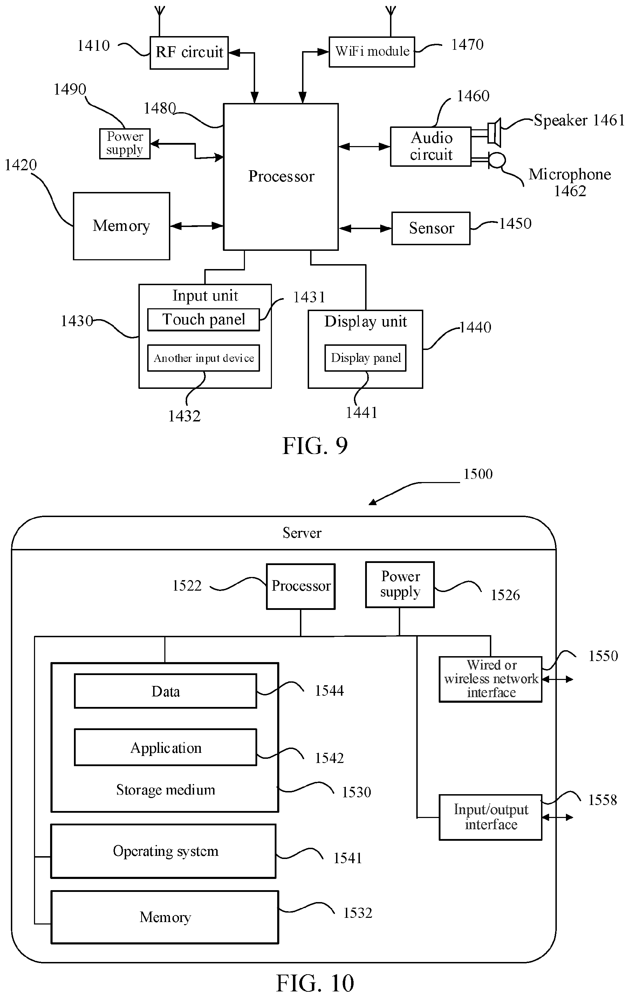

If the computer device is a terminal device, refer to FIG. 9. Embodiments of this application provide a terminal device. An example in which the terminal device is a mobile phone is used:

FIG. 9 shows a block diagram of a structure of a part of a mobile phone related to a terminal device according to an embodiment of this application. Referring to FIG. 9, the mobile phone includes: a radio frequency (RF) circuit 1410, a memory 1420, an input unit 1430, a display unit 1440, a sensor 1450, an audio circuit 1460, a wireless fidelity (WiFi) module 1470, a processor 1480, a power supply 1490, and other components. A person skilled in the art may understand that the structure, shown in FIG. 9, of the mobile phone does not constitute a limitation on the mobile phone, and the mobile phone may include more or fewer components than those shown in the figure, or a combination of some components, or a different component deployment may be used.

The following specifically describes the components of the mobile phone with reference to FIG. 9.

The RF circuit 1410 may be configured to receive and transmit a signal during information reception and transmission or calling. Particularly, after receiving downlink information from a base station, the information is transmitted to the processor 1480 for processing. In addition, designed uplink data is transmitted to the base station.

The memory 1420 may be configured to store a software program and a module. The processor 1480 runs the software program and the module that are stored in the memory 1420, to perform various functional applications and data processing of the mobile phone. The memory 1420 may mainly include a program storage region and a data storage region. The program storage region may store an operating system, an application required for at least one function (for example, a sound playback function and an image playback function), and the like. The data storage region may store data (for example, audio data and a phone book) created based on use of the mobile phone and the like. In addition, the memory 1420 may include a high speed random access memory, and may alternatively include a non-volatile memory, such as at least one magnetic disk storage device, a flash memory, or another volatile solid-state storage device.

The input unit 1430 may be configured to receive input digit or character information, and generate a keyboard signal input related to user settings and function control of the mobile phone. Specifically, the input unit 1430 may include a touch panel 1431 and another input device 1432.

The display unit 1440 may be configured to display information inputted by a user or information provided for the user, and various menus of the mobile phone. The display unit 1440 may include a display panel 1441.

The mobile phone may further include at least one sensor 1450 such as an optical sensor, a motion sensor, and other sensors.

The audio circuit 1460, a speaker 1461, and a microphone 1462 may provide audio interfaces between the user and the mobile phone.

WiFi is a short-distance wireless transmission technology. The mobile phone may help, by using the WiFi module 1470, the user to receive and transmit an email, browse a web page, access stream media, and the like, to allow wireless broadband Internet access of the user.

The processor 1480 is a control center of the mobile phone, and is connected to various parts of the entire mobile phone via various interfaces and lines. Various functions of the mobile phone and data processing are performed by running or executing the software program and/or the module stored in the memory 1420 and invoking data stored in the memory 1420.

The mobile phone further includes the power supply 1490 (such as a battery) for supplying power to the components.

In this embodiment, the processor 1480 included in the terminal device is further configured to perform the model determining method provided in the foregoing embodiments of this application.

If the computer device is a server, embodiments of this application further provide a server. Refer to FIG. 10. FIG. 10 is a structural diagram of a server 1500 according to an embodiment of this application. The server 1500 greatly differs due to different configurations or performances. The server may include one or more central processing units (CPU) 1522 (for example, one or more processors), a memory 1532, and one or more storage media 1530 (for example, one or more mass storage devices) for storing applications 1542 or data 1544. The memory 1532 and the storage medium 1530 may be configured for temporary storage or persistent storage. A program stored in the storage medium 1530 may include one or more modules (not shown). Each module may include a series of instruction operations on the server. Furthermore, the CPU 1522 may be configured to communicate with the storage medium 1530, and perform, on the server 1500, the series of instruction operations on the storage medium 1530.

The server 1500 may further include one or more power supplies 1526, one or more wired or wireless network interfaces 1550, one or more input/output interfaces 1558, and/or one or more operating systems 1541 such as Windows ServerTM, Mac OS XTM, UnixTM, LinuxTM, or FreeBSDTM.

Operations performed by the server in the foregoing embodiments may be based on the server structure shown in FIG. 10.

In addition, embodiments of this application further provide a storage medium. The storage medium is configured to store a computer program. The computer program is configured for performing the method provided in the foregoing embodiments.

Embodiments of this application further provide a computer program product including a computer program. The computer program, when run on a computer device, causes the computer device to perform the method provided in the foregoing embodiments.

A person of ordinary skill in the art may understand that all or some operations for implementing the foregoing method embodiments may be completed by a program instructing related hardware, the foregoing program may be stored in a computer-readable storage medium, and the program, when executed, performs operations including the foregoing method embodiments. The foregoing storage medium may be at least one of the following media: a read-only memory (ROM), a RAM, a magnetic disk or an optical disc, or various media capable of storing a computer program.

The embodiments of this specification are all described in a progressive mode. For the same or similar parts in the embodiments, refer to these embodiments. Descriptions of each embodiment focus on a difference from other embodiments. Especially, device and system embodiments are basically similar to the method embodiments, and therefore are described briefly. For related parts, refer to partial descriptions in the method embodiments. The described device and system embodiments are merely exemplary. The units described as separate parts may or may not be physically separated, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments without creative efforts.

The foregoing descriptions are merely a specific implementation of this application, but are not intended to limit the protection scope of this application. Any variation or replacement readily figured out by a person skilled in the art within the technical scope disclosed in this application shall fall within the protection scope of this application. In addition, based on the implementations provided in the foregoing aspects of this application, more implementations may be provided by further combinations. Therefore, the protection scope of this application shall be subject to the protection scope of the claims.

**Claims**

1. A model determining method, executable by a computer device, the method comprising:

   inputting a first sample image feature and a second sample image feature to an initial identification model, to obtain a first texture image and a second texture image, respectively, the first sample image feature and the second sample image feature indicating a same object of a pre-defined object type and having different scene parameter values;
   inputting the first sample image feature and the first texture image to the initial identification model, to obtain a first predicted object type of the object, and inputting the second sample image feature and the second texture image to the initial identification model, to obtain a second predicted object type of the object;
   determining, for training the initial identification model, a first difference between the first predicted object type and the pre-defined object type and a second difference between the second predicted object type and the pre-defined object type.

2. The method according to claim 1, wherein the first sample image feature and the second image feature are obtained from a sample image containing the object, and the sample image comprises a positive sample, and an identification tag of the positive sample identifies that an object in the positive sample belongs to a true object type; and
   wherein the initial identification model is trained by using the first difference, the second difference, and a third difference between a first texture image corresponding to the positive sample and a texture tag of the positive sample.

3. The method according to claim 2, further comprising:
   performing image texture conversion on the positive sample, to obtain the texture tag.

4. The method according to any one of claims 1 to 3, wherein obtaining the first predicted object type of the object comprises:

   mapping the first sample image feature to a feature space of the first texture image, to obtain a mapped sample feature;

determining a sample attention map based on feature distributions of the mapped sample feature and the first texture image for the same image region;

generating an attention sample feature according to the mapped sample feature and the sample attention map, and an attention texture image according to the first texture image and the sample attention map; and

inputting the attention sample feature and the attention texture image to the initial image identification mode, to obtain the first predicted object type of the object.

5. The method according to claim 4, wherein the first sample image feature and the second image feature are obtained from a sample image containing the object, and the method further comprising:

dividing the sample image into N image sub-regions, N being an integer greater than 1,

wherein the mapping the first sample image feature to a feature space of the first texture image, to obtain a mapped sample feature comprises:

determining, according to the first sample image feature, N sub-features corresponding to the N image sub-regions, and mapping the N sub-features to the feature space of the first texture image, to obtain N mapped sub-features forming the mapped sample feature; and

for an $i^{th}$ image sub-region in the N image sub-regions, i being an integer greater than or equal to 1 and less than or equal to N, the determining a sample attention map based on feature distributions of the mapped sample feature and the first texture image for the same image region comprises:

obtaining an $i^{th}$ mapped sub-feature corresponding to the $i^{th}$ image sub-region in the mapped sample feature, and an $i^{th}$ texture grid corresponding to the $i^{th}$ image sub-region in the first texture image; and

determining, according to feature distributions of the $i^{th}$ mapped sub-feature and the $i^{th}$ texture grid, an attention sub-map corresponding to the $i^{th}$ image sub-region in the sample attention map.

6. The method according to any one of claims 1 to 5, wherein the first sample image feature and the second image feature are obtained from a sample image containing the object, and the sample image comprises a positive sample and a negative sample, an identification tag of the positive sample identifies that the object in the positive sample belongs to a true object type, and an identification tag of the negative sample identifies that an object in the negative sample belongs to a false object type; and

wherein the initial identification model is trained by using the first difference, the second difference, a fourth difference between a first to-be-assessed feature of the positive sample and an anchor feature, and a fifth difference between a second to-be-assessed feature of the negative sample and the anchor feature.

7. The method according to claim 6, wherein the initial identification model comprises an initial encoder, the initial encoder comprises a plurality of network layers in addition to an input layer, the first to-be-assessed feature and the second to-be-assessed feature are output features of a target network layer in the initial encoder, and when the target network layer is an output layer of the initial encoder, the first to-be-assessed feature is the first sample image feature of the positive sample and the second to-be-assessed feature is a first sample image feature of the negative sample.

8. The method according to any one of claims 1 to 7, wherein the first sample image feature and the second image feature are obtained from a sample image containing the object, and the number of the sample image is M, and the second sample image feature is generated based on the first sample image feature by:

determining, for each other sample image than a $j^{th}$ sample image in the M sample images, a feature similarity between the $j^{th}$ sample image and the other sample images on the first sample image feature;

determining another sample image having a feature similarity less than a similarity threshold as a differentiated sample; and

generating a second sample image feature of the $j^{th}$ sample image according to a first sample image feature of the differentiated sample and a first sample image feature of the $j^{th}$ sample image.

9. The method according to claim 8, wherein the generating a second sample image feature of the $j^{th}$ sample image comprises:

generating an initial second sample image feature according to the first sample image feature of the differentiated sample and the first sample image feature of the $j^{th}$ sample image; and

mixing the first sample image feature of the $j^{th}$ sample image and the initial second sample image feature, by using the first sample image feature of the $j^{th}$ sample image as a mixing constraint, to obtain the second sample image feature of the $j^{th}$ sample image.

10. The method according to any one of claims 1 to 9, wherein the first sample image feature and the second image feature are obtained from a sample image containing the object, and the sample image comprises a positive sample and a negative sample, an identification tag of the positive sample identifies that an object in the positive sample belongs to a true object type, and an identification tag of the negative sample identifies that the object in the negative sample belongs to a false object type; and

wherein the initial identification model is trained by using the first difference, the second difference, and a feature similarity between the first sample image feature of the positive sample and a second sample image feature corresponding to the positive sample, the second sample image feature corresponding to the positive sample being a second sample image feature generated based on the first sample image feature of the positive sample.

11. The method according to any one of claims 1 to 10, wherein the initial identification model further comprises an initial feature embedding module, and obtaining the first predicted object type comprises:

inputting the first sample image feature to the initial feature embedding module, to obtain a corresponding first embedded feature; and
inputting the first embedded feature and the first texture image to the initial classifier, to obtain the first predicted object type.

12. A model determining apparatus, the apparatus comprising a first obtaining module, a prediction module, and a training module,

wherein the first obtaining module is configured to input a first sample image feature and a second sample image feature to an initial identification model, to obtain a first texture image and a second texture image, respectively, the first sample image feature and the second sample image feature indicating a same object of a pre-defined object type and having different scene parameter values;
the prediction module is configured to input the first sample image feature and the first texture image to the initial identification model, to obtain a first predicted object type of the object, and inputting the second sample image feature and the second texture image to the initial identification model, to obtain a second predicted object type of the object; and
the training module is configured to determine, for training the initial identification model, a first difference between the first predicted object type and the pre-defined object type and a second difference between the second predicted object type and the pre-defined object type.

13. A computer device, the computer device comprising a processor and a memory,

the memory being configured to store a computer program and transmit the computer program to the processor, and
the processor being configured to perform, according to the computer program, the method according to any one of claims 1 to 11.

14. A computer-readable storage medium, the computer-readable storage medium being configured to store a computer program, and the computer program being configured for performing the method according to any one of claims 1 to 11.

15. A computer program product comprising a computer program, the computer program, when run on a computer device, causing the computer device to perform the method according to any one of claims 1 to 11.

First sample image feature

Second sample image feature

Generate a second sample image feature identifying a different identification environment and having a same identification tag based on a first sample image feature

Initial decoder D

Texture image

First sample image

Initial encoder E

Train an initial identification model ← Identification loss function ← Initial classifier C

FIG. 1

Obtain a first sample image , where the first sample image has an identification tag identifying an object type to which an object in the first sample image belongs

S201

Input the first sample image to an initial identification model, to obtain a first sample image feature of the first sample image

S202

A server generates a second sample image feature based on the first sample image feature, where the second sample image feature and the first sample image feature have different scene parameter values and correspond to the same identification tag

S203

Input the first sample image feature and the second sample image feature to the initial Identification model, to obtain a first texture image corresponding to the first sample image feature and a second texture image corresponding to the second sample image feature

S204

Input the first sample image feature and the first texture image to the initial classifier to obtain a first prediction result of the object type, and input the second sample image feature and the second texture image to the initial classifier to obtain a second prediction result of the object type

S205

Determine a first difference between the first prediction result the identification tag and a second difference between the second prediction result and the identification tag

S206

Train the initial identification model with the first and second differences, to obtain an updated identification model

S207

FIG. 2

Select a difference sample · Randomly discard a sample · Generate a second sample image feature

FIG. 3

FIG. 4

FIG. 5

FIG. 6

FIG. 7

FIG. 8

1410 — RF circuit

WiFi module — 1470

1490

1480

Power supply

1420

Memory

Processor

1460

Audio circuit

Speaker 1461

Microphone 1462

Sensor — 1450

Input unit

1431

1430 — Touch panel

Another input device

1432

Display unit

1440

Display panel

1441

FIG. 9

1500

Server

1522 — Processor

Power supply

1526

Data — 1544

Wired or wireless network interface

1550

Application — 1542

Storage medium — 1530

Operating system — 1541

Input/output interface

1558

Memory — 1532

FIG. 10

## INTERNATIONAL SEARCH REPORT

| International application No. |
|---|
| **PCT/CN2024/071927** |

| A. | CLASSIFICATION OF SUBJECT MATTER |
|---|---|

G06V10/764(2022.01)i

According to International Patent Classification (IPC) or to both national classification and IPC

| B. | FIELDS SEARCHED |
|---|---|

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, IEEE: 图像, 样本, 对象, 目标, 检测, 识别, 类型, 标签, 编码器, 解码器, 分类器, 特征, 场景, 纹理, 预测, 损失, image, model, tag, label, encoder, decoder, sample, character, identify, classifier, loss, train, target, object, type

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116958627 A (TENCENT TECHNOLOGY (SHENZHEN) CO., LTD.) 27 October 2023 (2023-10-27)<br>claims 1-15 | 1-15 |
| A | CN 113743365 A (ALIPAY (HANGZHOU) INFORMATION TECHNOLOGY CO., LTD.) 03 December 2021 (2021-12-03)<br>description, paragraphs 0031-0070 | 1-15 |
| A | CN 112949534 A (PENG CHENG LABORATORY) 11 June 2021 (2021-06-11)<br>entire document | 1-15 |
| A | CN 114638304 A (BEIJING QIYI CENTURY SCIENCE & TECHNOLOGY CO., LTD.) 17 June 2022 (2022-06-17)<br>entire document | 1-15 |
| A | US 2022138454 A1 (CANON KABUSHIKI KAISHA) 05 May 2022 (2022-05-05)<br>entire document | 1-15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 March 2024** | **20 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/071927** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021169723 A1 (GUANGDONG OPPO MOBILE TELECOMMUNICATIONS CORP., LTD.) 02 September 2021 (2021-09-02)<br>entire document | 1-15 |

Form PCT/ISA/210 (second sheet) (July 2022)

| INTERNATIONAL SEARCH REPORT | | International application No. |
|---|---|---|
| Information on patent family members | | **PCT/CN2024/071927** |

| Patent document cited in search report | | | Publication date (day/month/year) | Patent family member(s) | | | Publication date (day/month/year) |
|---|---|---|---|---|---|---|---|
| CN | 116958627 | A | 27 October 2023 | None | | | |
| CN | 113743365 | A | 03 December 2021 | None | | | |
| CN | 112949534 | A | 11 June 2021 | None | | | |
| CN | 114638304 | A | 17 June 2022 | None | | | |
| US | 2022138454 | A1 | 05 May 2022 | CN | 114444558 | A | 06 May 2022 |
| WO | 2021169723 | A1 | 02 September 2021 | CN | 111368893 | A | 03 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102602211